# EUROPÄISCHE PATENTSCHRIFT

(11) **EP 2 864 017 B1**
(45) Veröffentlichungstag und Bekanntmachung des Hinweises auf die Patenterteilung: **14.06.2017**
(21) Anmeldenummer: 13737555.6
(22) Anmeldetag: 21.06.2013
(51) Int. Cl.: B01D 35/16, B01D 35/147, B01D 35/153, B01D 29/21

(54) **FLÜSSIGKEITSFILTER MIT EINEM ZENTRALEN ABLASSKANAL UND FILTEREINSATZ FÜR EINEN FLÜSSIGKEITSFILTER**
LIQUID FILTER WITH A CENTRAL DISCHARGE CHANNEL AND FILTER UNIT FOR A LIQUID FILTER
FILTRE À LIQUIDE POURVU D'UN CANAL D'ÉVACUATION CENTRAL, ET ÉLÉMENT FILTRANT POUR UN FILTRE À LIQUIDE

(30) Priorität: 26.06.2012 DE 102012210900
(43) Veröffentlichungstag der Anmeldung: 29.04.2015
(73) Patentinhaber: Hengst SE & Co. KG, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2013/062974
(87) Internationale Veröffentlichungsnummer: WO 2014/001214

(56) Entgegenhaltungen:
- EP-B1- 1 307 274
- WO-A1-2008/009324
- DE-U1- 20 118 683
- US-A1- 2008 053 886
- US-B1- 6 569 326
- US-B1- 6 685 829

## Beschreibung

Die vorliegende Erfindung betrifft ein Flüssigkeitsfilter, insbesondere Ölfilter einer Brennkraftmaschine, mit einem Filtergehäuse mit einem abnehmbaren Schraubdeckel und mit einem Rohflüssigkeitseinlass und einem Reinflüssigkeitsauslass, mit einem im Filtergehäuse auswechselbar angeordneten, eine Rohseite und eine Reinseite des Flüssigkeitsfilters voneinander trennenden Filtereinsatz, wobei das Filtergehäuse weiter einen zentralen Ablasskanal zum Entleeren des Filtergehäuses bei einem Entnehmen des Filtereinsatzes aufweist, wobei ein im Einbauzustand filtergehäusefester Verschlusszapfen mit wenigstens einer in einem Dichtsitz in dem Ablasskanal radial dichtenden Dichtung zwischen einer bei eingebautem Filtereinsatz und geschlossenem Schraubdeckel eingenommenen, unteren Schließstellung und einer bei abgenommenem Schraubdeckel und entnommenem Filtereinsatz eingenommenen, oberen Öffnungsstellung axial verstellbar ist, und wobei zwischen dem Schraubdeckel oder Filtereinsatz einerseits und dem Verschlusszapfen andererseits mechanische, lösbare Koppelelemente vorgesehen sind. Außerdem betrifft die Erfindung einen Filtereinsatz für ein Flüssigkeitsfilter.

Die EP 1 307 274 B1 zeigt einen Flüssigkeitsfilter zur Reinigung von Flüssigkeiten wie z. B. Schmieröl, Wasser oder Kraftstoff. Der Flüssigkeitsfilter weist ein Filtergehäuse, ein Filterelement, einen Stützkörper und ein Schiebeventil auf. Das Schiebeventil verhindert im geschlossenen Zustand, dass Flüssigkeit von der Rohseite oder der Reinseite in einen Flüssigkeitsablauf fließen kann. Sobald das Filtergehäuse geöffnet wird, wird das Schiebeventil axial bewegt, wodurch der Flüssigkeitsablauf freigegeben wird und das Filtergehäuse leer laufen kann. Bei diesem Flüssigkeitsfilter ist das Schiebeventil mit einem Stützkörper, welcher mit einem Gehäusedeckel verbunden ist, lösbar verschnappt. Dadurch kann das Schiebeventil von dem Stützkörper getrennt werden. Dies ist vorteilhaft, da durch die Trennung der Bauteile voneinander die Wartungshöhe des Flüssigkeitsfilters reduziert wird.

Als nachteilig hat sich bei dem bekannten Flüssigkeitsfilter allerdings herausgestellt, dass die Verbindungsmittel, mittels welchen das Schiebeventil mit dem Stützkörper verschnappt ist, im Betrieb zu Schäden, insbesondere Abbruch, neigen. Hierdurch können Teile der Verbindungsmittel auf die Reinflüssigkeitsseite des Filters und von dort zu nachgeordneten Komponenten, wie im Fall eines Ölfilters eine Brennkraftmaschine mit zu versorgenden Schmierstellen, gelangen und dort Folgeschäden verursachen. Außerdem müssen bei einer Filterwartung die Verbindungsmittel manuell, insbesondere durch Ausüben einer ausreichenden Zugkraft, voneinander getrennt werden.

Für die vorliegende Erfindung stellt sich daher die Aufgabe, ein Flüssigkeitsfilter der eingangs genannten Art sowie einen Filtereinsatz zu schaffen, bei denen ein sicherer Betrieb ohne die Gefahr von Schäden für nachgeordnete Komponenten und eine einfache Handhabung bei einer Filterwartung gewährleistet sind.

Die Lösung des ersten, das Flüssigkeitsfilter betreffenden Teils der Aufgabe gelingt erfindungsgemäß mit einem Flüssigkeitsfilter, das dadurch gekennzeichnet ist,
- dass die Koppelelemente durch Drehen des Schraubdeckels oder Filtereinsatzes in Festdrehrichtung des Schraubdeckels in einen ein Drehmoment und eine Schubkraft übertragenden Eingriff treten,
- dass die Koppelelemente durch Drehen des Schraubdeckels oder Filtereinsatzes in Losdrehrichtung des Schraubdeckels in einen ein Drehmoment und eine Zugkraft übertragenden Eingriff treten, zumindest solange sich die Dichtung ein Bremsmoment auf den Verschlusszapfen ausübend im Dichtsitz befindet, und
- dass die Koppelelemente selbsttätig außer Eingriff treten, wenn die Dichtung aus dem Dichtsitz ausgetreten und dadurch der Verschlusszapfen frei um seine Längsachse drehbar ist.

Mit der Erfindung wird vorteilhaft erreicht, dass die mit einer Schnappverbindung verbundenen Gefahren von mechanischen Schäden, insbesondere Abbruch von Teilen der Verbindungsmittel, sicher vermieden werden, weil erfindungsgemäß die Koppelelemente allein durch Drehen relativ zueinander in und außer Eingriff gebracht werden. Mechanische Biegebeanspruchungen der einzelnen Teile der Koppelelemente treten dabei nicht auf. Hierdurch wird ein zuverlässiger und vor Schäden sicherer Betrieb des Flüssigkeitsfilters gewährleistet. Zudem wird eine besonders einfache Handhabung erreicht, weil sich die Koppelelemente beim Abschrauben des Schraubdeckels und Herausziehen des Filtereinsatzes selbsttätig voneinander trennen, sobald der Verschlusszapfen seine Öffnungsstellung erreicht hat. Ein aufwändiges manuelles Trennen der Koppelelemente ist vorteilhaft nicht mehr erforderlich.

Gemäß der Erfindung bilden die Koppelelemente eine Verzahnung, wobei die Zähne der jeweiligen Koppelelemente in Umfangsrichtung in entgegengesetzte Richtungen weisen und wobei in Umfangsrichtung gesehen der Zahnabstand jeweils größer ist als die Zahnlänge. Die Zähne bilden einerseits einfache und andererseits belastbare Koppelelemente. Durch das angegebene Verhältnis von Zahnabstand zu Zahnlänge können die Zähne der einen Seite jeweils zwischen die Zähne der anderen Seite praktisch Kräfte frei axial eingeführt und dann durch Verdrehen relativ zueinander in Eingriff gebracht werden. Umgekehrt kann der Eingriff der Koppelelemente durch Verdrehen in entgegengesetzte Richtung und axiales Auseinanderziehen ebenfalls sehr einfach getrennt werden.

Eine weitere Konkretisierung der Erfindung schlägt vor, dass in Radialrichtung betrachtet die Zähne jeweils asymmetrische Zahnflanken haben, wobei die jeweils zusammenwirkenden Zahnflanken in einem ersten Winkel schräg zur Umfangsrichtung, die jeweils anderen Zahnflanken in einem zweiten, kleineren Winkel zur Umfangsrichtung und die Zahnrücken in Axialrichtung verlaufen. Dadurch, dass die zusammenwirkenden Zahnflanken in einem Winkel schräg zur Umfangsrichtung verlaufen, wird erreicht, dass bei der einen Drehrichtung die Koppelelemente in Eingriff gelangen, solange ein Bremsmoment auf den Verschlusszapfen ausgeübt wird, und dass die Koppelelemente selbsttätig außer Eingriff treten, sobald der Verschlusszapfen frei drehbar ist, da dann infolge von Schwerkraftwirkung die Zähne des Verschlusszapfens über die schräg verlaufenden Kontaktflächen entlang der damit zusammenwirkenden anderen Zähne selbsttätig abgleiten.

Um das erwähnte Abgleiten der Zähne der zusammenwirkenden Koppelelemente zu gewährleisten, ist bevorzugt vorgesehen, dass der erste Winkel zwischen 30° und 60° beträgt.

Der zweite, kleinere Winkel ist bevorzugt gleich oder größer der Gewindesteigung des Schraubdeckels. Hiermit wird gewährleistet, dass beim Zusammenbauen des Flüssigkeitsfilters ein axiales Verspannen und Verklemmen vermieden wird, was ansonsten auftreten könnte, wenn die in Axialrichtung weisenden Flanken der einen Zähne auf die entgegengesetzt in Axialrichtung weisenden Flanken der anderen Zähne auftreffen würden.

In weiterer Ausgestaltung ist bevorzugt vorgesehen, dass die Zähne der Verzahnungen jeweils auf zumindest bereichsweise identischen Durchmessern einerseits axial nach unten oder radial nach außen oder innen von dem Schraubdeckel oder dem Filtereinsatz und andererseits entsprechend axial nach oben oder radial nach innen oder außen von dem Verschlusszapfen vorragen. Die konkrete Wahl der Anordnung der Zähne richtet sich insbesondere nach den vorgegebenen Platzverhältnissen, wonach die eine oder andere Anordnung vorteilhafter sein kann.

In einer bevorzugten Weiterbildung der Erfindung ist vorgesehen, dass der Verschlusszapfen mit federnden Halteelementen ausgestattet ist, die in Öffnungsstellung des Verschlusszapfens ausgefedert sind und den Verschlusszapfen im Ablasskanal in Axialrichtung halten, die beim Übergang des Verschlusszapfens von seiner Öffnungsstellung in seine Schließstellung und umgekehrt vorübergehend einfederbar sind und dabei in einen Reibschluss mit dem Filtergehäuse treten und die in Schließstellung des Verschlusszapfens wieder ausgefedert sind. Mit den federnden Halteelementen werden zwei vorteilhafte Funktionen erzielt. Die eine Funktion besteht darin, den Verschlusszapfen in seiner Öffnungsstellung, in der seine Koppelelemente von den Koppelelementen des Filtereinsatzes oder Schraubdeckels getrennt sind, axial zu halten und einen ungehinderten Flüssigkeitsablauf zu gewährleisten. Die zweite Funktion besteht darin, auf den Verschlusszapfen ein Bremsmoment auszuüben, auch nachdem dessen Dichtung oder Dichtungen aus ihren zugehörigen Dichtsitzen entfernt sind, um ein weiteres Anheben des Verschlusszapfens beim Abschrauben des Schraubdeckels vom Gehäuse zu bewirken und den Verschlusszapfen in eine solche Höhe relativ zum Filtergehäuse zu bringen, in der die Dichtung oder Dichtungen des Verschlusszapfens einen ausreichenden, einen störungsfreien Flüssigkeitsdurchfluss gewährleistenden axialen Abstand von dem zugehörigen Dichtsitz oder den zugehörigen Dichtsitzen hat/haben. Erst wenn die federnden Halteelemente ihren Reibschluss zum Filtergehäuse in der vollständig erreichten Öffnungsstellung des Verschlusszapfens verlieren, ist der Verschlusszapfen frei um seine Längsachse drehbar und kann sich so selbsttätig vom Schraubdeckel oder Filtereinsatz trennen.

Zwecks einer kompakten Bauweise mit möglichst wenigen Bauteilen ist bevorzugt vorgesehen, dass der Filtereinsatz einen zentralen Stützkörper aufweist und dass die filtereinsatzseitigen Koppelelemente am unteren Ende des Stützkörpers angeordnet sind. In dieser Ausgestaltung ist der Stützkörper Teil des Filtereinsatzes und wird bei einer Filterwartung mit dem Filtereinsatz ausgetauscht.

In einer alternativen Ausführung des Flüssigkeitsfilters ist vorgesehen, dass der Verschlusszapfen mit einem Stützkörper für den Filterstoffkörper des Filtereinsatzes dauerhaft verbunden oder einstückig ausgeführt ist und dass die Koppelelemente einerseits am Schraubdeckel und andererseits oben am Stützkörper angeordnet sind. In dieser Ausführung ist der Stützkörper ein dauerhaft im Filtergehäuse verbleibendes Bauteil.

Eine weitere Ausführung des Flüssigkeitsfilters gemäß Erfindung sieht vor, dass in dem Schraubdeckel ein deckelfestes Filterumgehungsventil angeordnet ist und dass zwischen dem Filterumgehungsventil oder dem Schraubdeckel einerseits und dem Filtereinsatz, insbesondere einem darin angeordneten Stützkörper, andererseits zweite mechanische, lösbare Koppelelemente vorgesehen sind. Hier ist also eine doppelte Anordnung von zusammenwirkenden Koppelelementen vorgesehen, um einerseits den Schraubdeckel und den Filtereinsatz und andererseits den Filtereinsatz und den Verschlusszapfen auf einfache Weise je nach Bedarf miteinander zu verbinden und voneinander zu trennen.

Für die zweiten Koppelelemente ist erfindungsgemäß bevorzugt vorgesehen, dass diese durch Drehen des Schraubdeckels in dessen Festdrehrichtung in einen ein Drehmoment und eine Schubkraft übertragenden Eingriff und durch Drehen des Schraubdeckels in dessen Losdrehrichtung in einen ein Drehmoment und eine Zugkraft übertragenden Eingriff treten. Somit wird auch bei den zweiten Koppelelementen deren Verbinden und Trennen sehr einfach gehalten.

In weiterer Ausgestaltung wird vorgeschlagen, dass die zweiten Koppelelemente eine Verzahnung bilden, wobei die Zähne der jeweiligen Koppelelemente in Umfangsrichtung in entgegengesetzte Richtungen weisen und wobei in Umfangsrichtung gesehen der Zahnabstand jeweils größer ist als die Zahnlänge. Durch das angegebene Verhältnis von Zahnabstand zu Zahnlänge können auch bei den zweiten Koppelelementen die Zähne der einen Seite jeweils zwischen die Zähne der anderen Seite praktisch kräftefrei axial eingeführt und dann durch Verdrehen relativ zueinander in Eingriff gebracht werden. Umgekehrt kann der Eingriff der zweiten Koppelelemente durch Verdrehen in entgegengesetzter Richtung und axiales Auseinanderziehen ebenfalls sehr einfach getrennt werden.

Im Unterschied zu den ersten Koppelelementen ist es bei der Bedienung des Flüssigkeitsfilters im Rahmen einer Wartung vorteilhaft, dass sich der Filtereinsatz und der Schraubdeckel nicht selbsttätig voneinander lösen. Dazu schlägt die Erfindung vor, dass in Radialrichtung betrachtet die Zähne der zweiten Koppelelemente jeweils asymmetrische Zahnflanken haben, wobei die jeweils zusammenwirkenden Zahnflanken im Wesentlichen in Umfangsrichtung, die jeweils anderen Zahnflanken in einem Winkel zur Umfangsrichtung und die Zahnrücken in Axialrichtung verlaufen. Die Ausrichtung der jeweils zusammenwirkenden Zahnflanken im Wesentlichen in Umfangsrichtung schließt ein Abgleiten der Zähne der einen Seite auf den Zähnen der anderen Seite aus, so dass hier ein nicht gewünschtes selbsttätiges Trennen der Koppelelemente beim Losdrehen des Schraubdeckels vermieden wird.

Bevorzugt ist auch hier der Winkel der jeweils anderen Zahnflanken gleich oder größer der Gewindesteigung des Schraubdeckels, um ein axiales Verspannen oder Verklemmen zu vermeiden, wenn beim Zusammenführen von Filtereinsatz und Schraubdeckel zufällig die in Axialrichtung aufeinander zu weisenden Stirnflächen der Zähne in Gegenüberstellung zueinander gelangen.

Um das zuvor erwähnte unerwünschte selbsttätige Trennen vom Schraubdeckel und Filtereinsatz noch sicherer zu vermeiden, sind zweckmäßig die zweiten Koppelelemente gleichzeitig als in Umfangsrichtung wirkende Rastelemente ausgebildet, deren Rastmoment kleiner ist als ein Bremsmoment des in Schließstellung befindlichen Verschlusszapfens. Beim Festdrehen des Schraubdeckels sind die ersten und die zweiten Koppelelemente hinsichtlich axialer Zugkraftübertragung außer Eingriff. Bei Umkehrung der Drehrichtung des Schraubdeckels, also bei dessen Losdrehen, treten zunächst die zweiten Koppelelemente und erst danach die ersten Koppelelemente außer Eingriff, wodurch die zuvor beschriebenen gewünschten Funktionsabläufe bei der Wartung des Filters sichergestellt werden.

Um einerseits die zu übertragenden Kräfte, insbesondere die axialen Zugkräfte, sicher aufnehmen und günstig verteilen zu können und um andererseits die Formgebung und Fertigung der Teile des Filtereinsatzes einfach zu halten, ist bevorzugt vorgesehen, dass die Verzahnungen der Koppelelemente jeweils zwei bis sechs, vorzugsweise jeweils vier, über den Umfang verteilte Zähne aufweisen.

Weiter betrifft die Erfindung einen Filtereinsatz für ein Flüssigkeitsfilter, insbesondere für ein Ölfilter einer Brennkraftmaschine, wobei der Filtereinsatz in ein Filtergehäuse mit einem abnehmbaren Schraubdeckel und mit einem Rohflüssigkeitseinlass und einem Reinflüssigkeitsauslass auswechselbar einbaubar ist und im Einbauzustand eine Rohseite und eine Reinseite des Flüssigkeitsfilters voneinander trennt und wobei an dem Filtereinsatz mechanische, lösbare Koppelelemente zum Verbinden mit Koppelelementen an einem im Einbauzustand filtergehäusefesten Verschlusszapfen vorgesehen sind, der in einem zentralen Ablasskanal des Filtergehäuses angeordnet und mit wenigstens einer in einem Dichtsitz in dem Ablasskanal radial dichtenden Dichtung versehen ist und der zwischen einer bei eingebautem Filtereinsatz und geschlossenem Schraubdeckel eingenommenen, unteren Schließstellung und einer bei abgenommenem Schraubdeckel und entnommenem Filtereinsatz eingenommenen, oberen Öffnungsstellung zu einem Entleeren des Filtergehäuses bei einem Entnehmen des Filtereinsatzes axial verstellbar ist.

Zur Lösung des zweiten, den Filtereinsatz betreffenden Teils der Aufgabe wird ein Filtereinsatz gemäß Anspruch 16 vorgeschlagen.

Mit dem erfindungsgemäßen Filtereinsatz werden die oben schon im Zusammenhang mit dem Flüssigkeitsfilter beschriebenen Vorteile erreicht.

Vorteilhafte Ausgestaltungen und Weiterbildungen des erfindungsgemäßen Filtereinsatzes sind in den Ansprüchen 17 bis 26 angegeben. Hinsichtlich der mit diesen Ausgestaltungen des Filtereinsatzes erreichbaren Vorteile wird auf die entsprechenden Teile der Beschreibung des Flüssigkeitsfilters verwiesen.

Im Folgenden werden Ausführungsbeispiele der Erfindung anhand einer Zeichnung erläutert. Die Figuren der Zeichnung zeigen:
- Figur 1 bis Figur 23: ein erstes Ausführungsbeispiel eines Flüssigkeitsfilters, in verschiedenen Darstellungen und in verschiedenen Betriebszuständen, und
- Figur 24 bis Figur 32: ein zweites Ausführungsbeispiel des Flüssigkeitsfilters, ebenfalls in verschiedenen Darstellungen und in verschiedenen Betriebszuständen.

In der nachfolgenden Figurenbeschreibung werden gleiche Teile in den verschiedenen Zeichnungsfiguren stets mit den gleichen Bezugsziffern bezeichnet, so dass nicht jede Bezugsziffer in jeder Zeichnungsfigur neu erläutert werden muss. Die Bedeutung der einzelnen Bezugsziffern ergibt sich zudem aus der anhängenden Bezugszeichenliste.

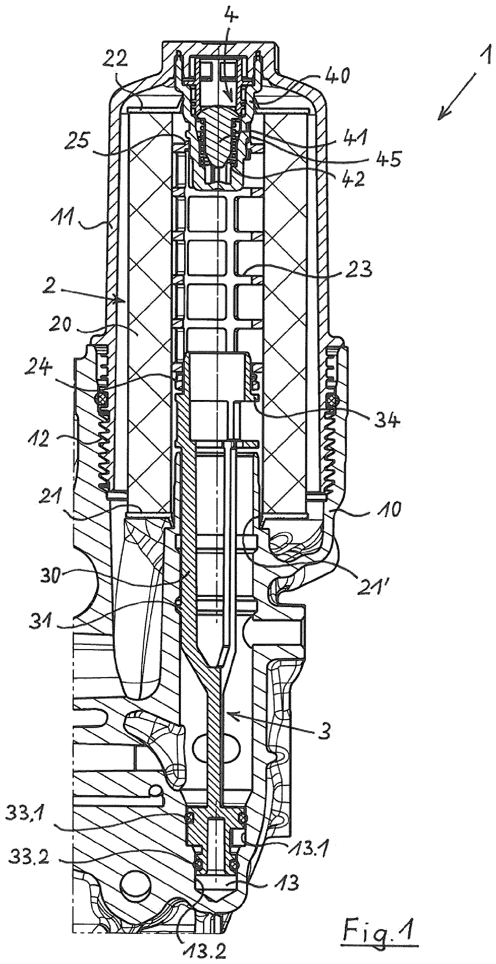

Figur 1 zeigt im Längsschnitt einen Flüssigkeitsfilter 1 mit einem Filtergehäuse 10, einem darin auswechselbar angeordneten Filtereinsatz 2 und einem Schraubdeckel 11. Im Filtergehäuse 10 verläuft ein zentraler Ablasskanal 13, der zum Entleeren des Filtergehäuses 10 bei einem Wechsel des Filtereinsatzes 2 dient. Im normalen Betrieb ist der Ablasskanal 13 durch einen Verschlusszapfen 3 mit zwei an dessen unterem Ende angeordneten, axial voneinander beabstandeten, einem unterschiedlichen Durchmesser aufweisenden Dichtungen 33.1 und 33.2 verschlossen, die mit jeweils einem Kanalabschnitt 13.1 und 13.2 radial dichtend zusammenwirken. Zum Öffnen des Ablasskanals 13 ist der Verschlusszapfen 3 in seiner Axialrichtung nach oben bewegbar, wenn der Filtereinsatz 2 gewechselt wird.

Der Filtereinsatz 2 besteht aus einem Filterstoffkörper 20, der unterseitig von einer Endscheibe 21 und oberseitig von einer Endscheibe 22 eingefasst ist. Im Inneren des Filtereinsatzes 2 ist ein Stützkörper 23 in Gitterform angeordnet.

Am oberen Ende des Verschlusszapfens 3 sind erste Koppelelemente 34 angeformt, die mit ersten Koppelelementen 24 am unteren Ende des Stützkörpers 23 zusammenwirken und in und außer Eingriff treten können.

Weitere, zweite Koppelelemente sind weiter oben im Flüssigkeitsfilter 1 vorgesehen, nämlich zweite Koppelelemente 25 am oberen Ende des Stützkörpers 23 und zugehörige zweite Koppelelemente 45 an einem Ventilgehäuse 40 eines deckelfest eingebauten Filterumgehungsventils 4. Im Inneren des Ventilgehäuses 40 ist ein mit einer Feder 42 vorbelasteter Ventilkörper 41 axial verschieblich relativ zu einem Ventilsitz geführt.

In dem in Figur 1 gezeigt den zusammengebauten Zustand des Flüssigkeitsfilters 1 ist der Filtereinsatz 2 mit seiner unteren Endscheibe 21 und der darin vorgesehenen zentralen Aufstecköffnung 21' voraus von oben her auf einen oberen Teil des Verschlusszapfens 3 aufgesetzt, der dort einen Führungsabschnitt 30 bildet. An ihrem Innenumfang ist die untere Endscheibe 21 dichtend auf einen einen Teil des Filtergehäuses 10 bildenden zentralen Rohrstutzen aufgesetzt.

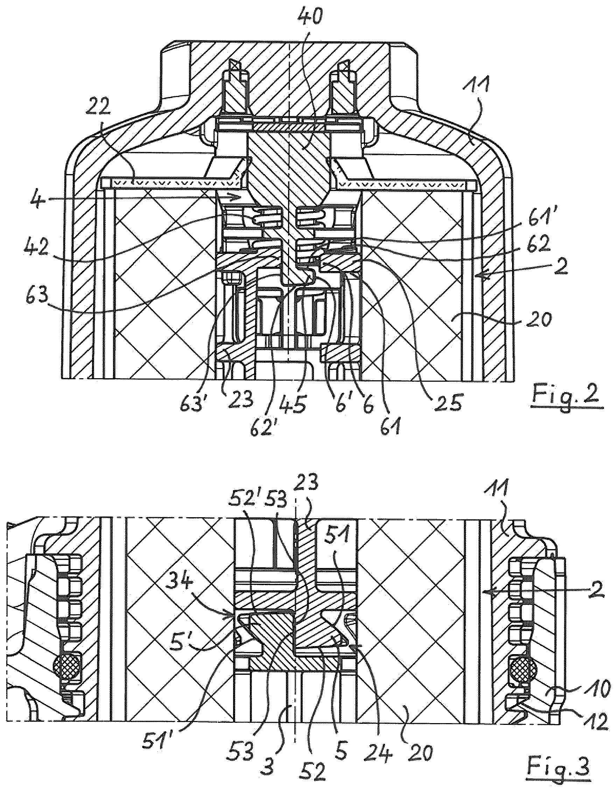

In Figur 2 ist der obere Teil des Flüssigkeitsfilters 1 nach Figur 1 vergrößert im Längsschnitt dargestellt. Am oberen Ende des Stützkörpers 23 sind dessen zweite Koppelelemente 25 als in Umfangsrichtung weisende Zähne 6 angeformt. Am Ventilgehäuse 40 sind als zweite Koppelelemente 45 in entgegengesetzte Richtung weisende Zähne 6' angeformt. Die Zähne 6 und 6' wirken nach Art eines Bajonettverschlusses zusammen. Die jeweils zusammenwirkenden Zahnflanken 61 und 61' verlaufen im Wesentlichen in Umfangsrichtung. Die jeweils anderen Zahnflanken 62 und 62' verlaufen unter einem zur Umfangsrichtung schrägen Winkel, wobei der Winkel gleich oder größer der Steigung des Schraubgewindes 12 zwischen Deckel 11 und Filtergehäuse 10 ist. Hierdurch wird ein Verklemmen der Koppelelemente 25 und 45 vermieden. Die Zahnrücken 63 und 63' verlaufen jeweils in Axialrichtung und liegen bei dem Zustand gemäß Figur 2 aneinander an. Dieser Zustand ergibt sich, wenn der Schraubdeckel 11 in seiner Festdrehrichtung gedreht wird. In diesem Zustand kann ein Drehmoment vom Schraubdeckel 11 auf den Stützkörper 23 übertragen werden, nicht aber eine axiale Zugkraft.

In Figur 3 ist ein Bereich des Flüssigkeitsfilters 1 im Schnitt vergrößert dargestellt, in dem sich die ersten Koppelelemente 24 und 34 befinden. Die ersten Koppelelemente 24 und 34 sind in Form von Zähnen 5, 5' mit asymmetrischen Zahnflanken ausgeführt. Die obere Zahnflanke 51 der Zähne 5, die die ersten Koppelelemente 24 bilden, verlaufen unter einem schrägen Winkel von etwa 45° zur Umfangsrichtung. Entsprechend laufen die unteren Zahnflanken 50' der die Koppelelemente 34 bildenden Zähne 5' unter einem gleichen Winkel schräg zur Umfangsrichtung. Die untere Zahnflanke 52 der Zähne 5 und die obere Zahnflanke 52' der Zähne 5' verlaufen unter einem geringen schrägen Winkel zur Umfangsrichtung, wobei dieser Winkel gleich oder größer dem Steigungswinkel des Schraubgewindes 12 ist. Im Zustand nach Figur 3, der sich bei Drehen des Schraubdeckels 11 in Festdrehrichtung ergibt, liegen die Zahnrücken 53 und 53' der Zähne 5 und 5' aneinander an, wodurch ein Drehmoment in Festdrehrichtung des Schraubdeckels 11 und eine axialen Schubkraft übertragen werden können, nicht aber eine axiale Zugkraft.

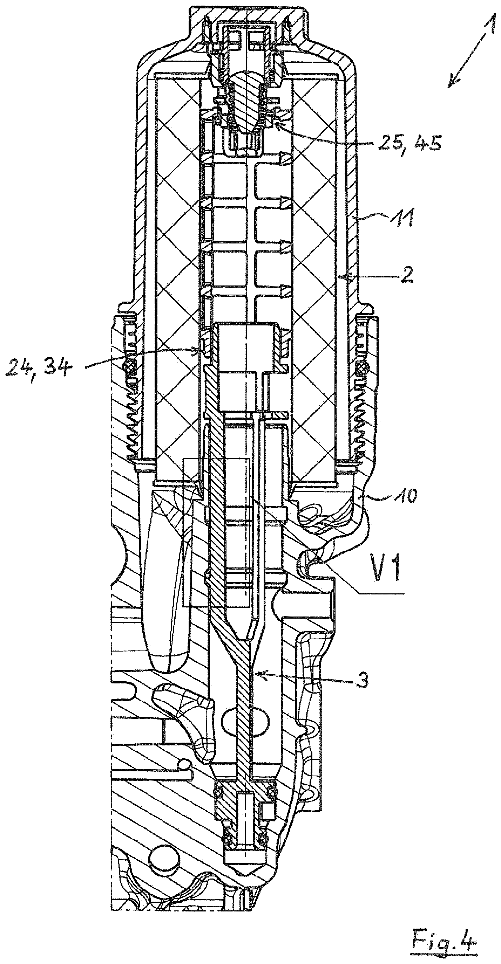

In Figur 4 ist das Flüssigkeitsfilter 1 in einem Zustand gezeigt, der sich ergibt, wenn der Schraubdeckel 11 um einen gewissen Winkel in Losdrehrichtung gedreht wurde. Hierdurch treten sowohl die ersten Koppelelemente 24 und 34 als auch die zweiten Koppelelemente 25 und 45 in einen eine axiale Zugkraft übertragenden Eingriff miteinander.

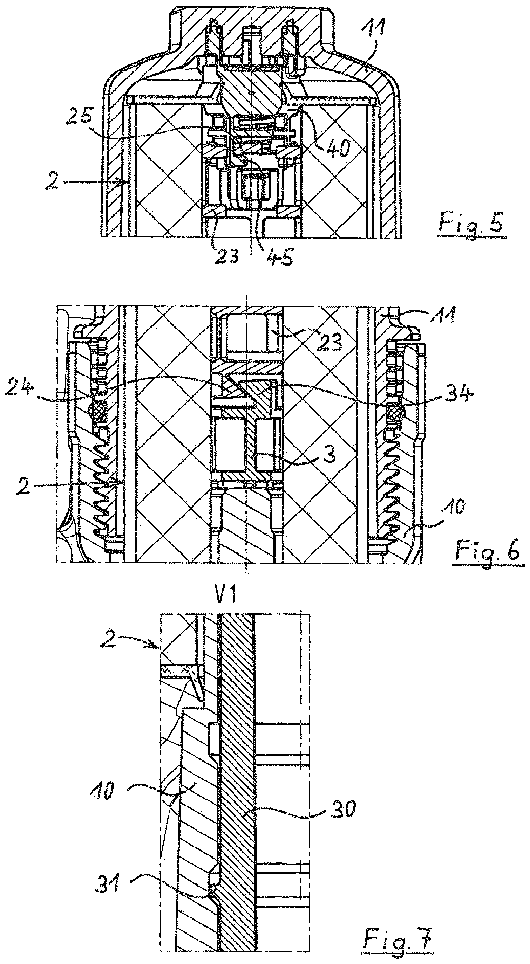

Für die zweiten Koppelelemente 25 und 45 ist dieser Eingriffszustand, in dem axiale Zugkräfte übertragbar sind, in Figur 5 dargestellt.

In Figur 6 ist dargestellt, wie die ersten Koppelelemente 24 und 34 gerade in ihrem eine axiale Zugkraft übertragenden Eingriff miteinander treten.

In Figur 7 ist das Detail V1 aus Figur 4 gezeigt. Hier wird deutlich, dass in diesem Zustand Halteelemente 31 am Führungsabschnitt 30 des Verschlusszapfens 3 in einer umlaufenden Nut des Filtergehäuses 10 liegen, wodurch der Führungsabschnitt 30 entspannt ist.

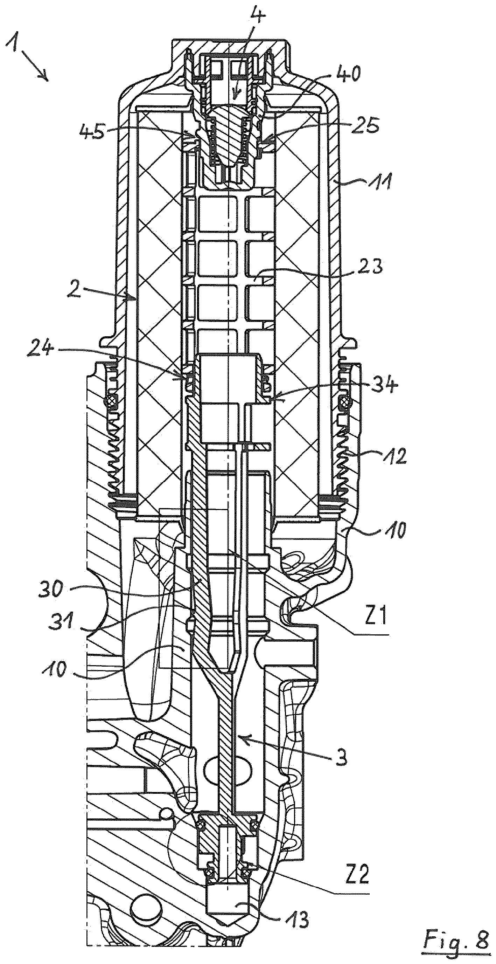

In Figur 8 ist der Zustand des Flüssigkeitsfilters 1 nach einem weiteren Losdrehen des Schraubdeckels 11 gezeigt. Durch die in Eingriff miteinander befindlichen ersten Koppelelemente 24 und 34 und zweiten Koppelelemente 25 und 45 wird bei der Bewegung des Schraubdeckels 11 nach oben sowohl der Stützkörper 23 als auch der Verschlusszapfen 3 mit nach oben genommen. Dabei gelangen die Halteelemente 31 in einen nicht genuteten Bereich des Filtergehäuses 10, wodurch der Führungsabschnitt 30 mittels der Halteelementen 31 unter Spannung gesetzt wird und ein Bremsmoment relativ zum Filtergehäuse 10 erfährt.

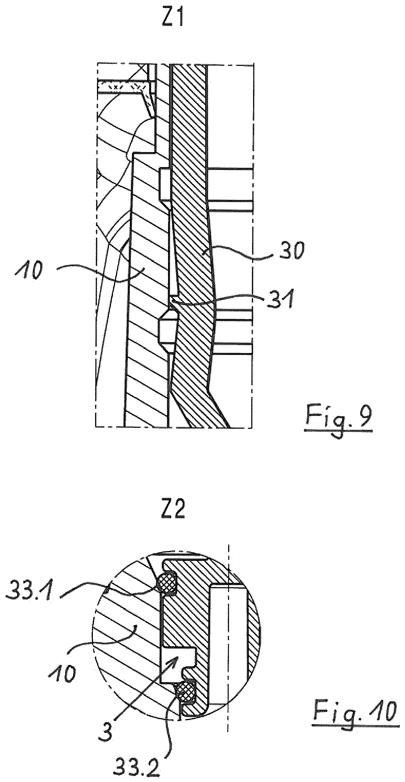

In Figur 9 ist das Detail Z1 aus Figur 8 vergrößert dargestellt. Hier wird die Verspannung des Führungsabschnitts 30 erkennbar, weil das Halteelement 31 oberhalb der dieses zunächst aufnehmenden Nut des Filtergehäuses 10 liegt und dadurch eine Reibung entsteht.

In Figur 10 ist die Lage des unteren Endes des Verschlusszapfens 3 im Ablasskanal 13 gezeigt. Die Dichtungen 33.1 und 33.2 verlassen gerade ihre Dichtsitze, wodurch eine zuvor von den Dichtungen 33.1 und 33.2 erzeugte Reibung wegfällt. Diese Reibung wird im vorliegenden Beispiel durch die Reibung der Halteelemente 31 am Filtergehäuse 10 ersetzt.

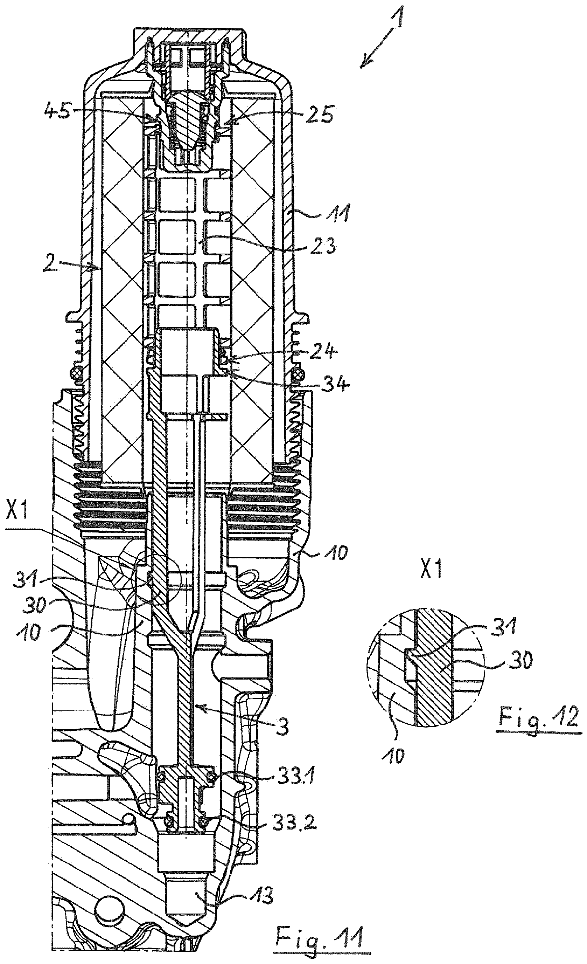

In Figur 11 ist der Flüssigkeitsfilter 1 nach noch weiterem Herausdrehen des Schraubdeckels 11 aus dem Filtergehäuse 10 gezeigt. Hierdurch ist der Verschlusszapfen 3 so weit angehoben, dass dessen Halteelemente 31 nun in eine zweite, obere Nut im Filtergehäuse 10 gelangt sind, so dass nun der Führungsabschnitt 30 des Verschlusszapfens 3 wieder entspannt ist und kein Bremsmoment auf den Verschlusszapfen 3 mehr ausgeübt wird. Der Verschlusszapfen 3 ist nun also frei um seine Längsmittelachse drehbar.

In Figur 12 ist das Detail X1 aus Figur 11 vergrößert dargestellt. Hier ist sichtbar, wie das Halteelement 31 des Führungsabschnitts 30 entspannt in der oberen Nut des Filtergehäuses 10 liegt.

Weil sich der Verschlusszapfen 3 nun frei in Umfangsrichtung drehen kann, führt die Schwerkraft dazu, dass sich die Koppelelemente 24 und 34 selbsttätig voneinander lösen, da über die schrägen Zahnflanken 51 und 51' ein selbsttätiges Abgleiten erfolgt. Somit ist die Einheit aus Schraubdeckel 11, Filtereinsatz 2 und Stützkörper 23 einerseits dann von dem übrigen Flüssigkeitsfilter andererseits getrennt.

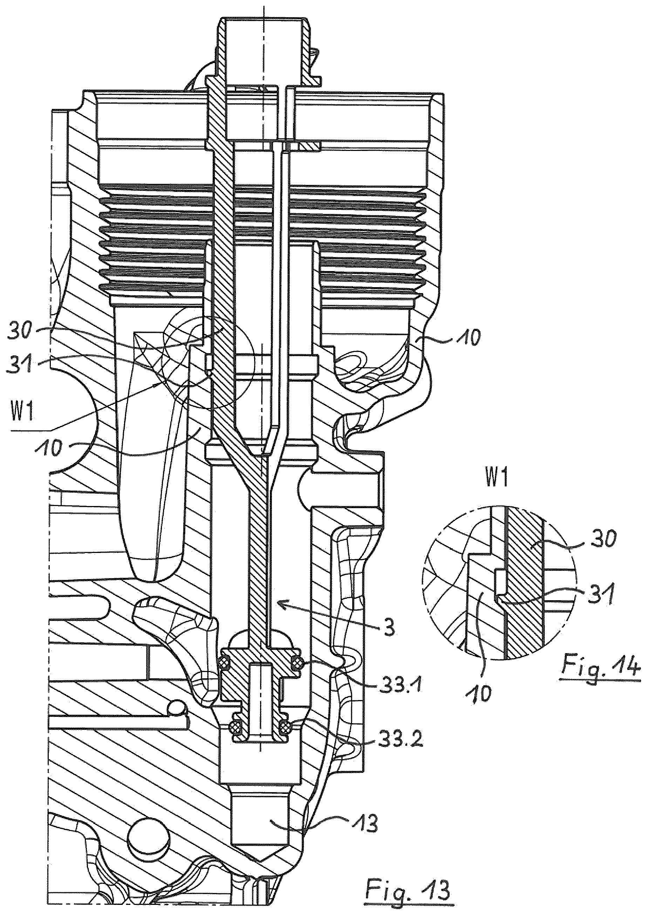

Nach Wegnehmen des Schraubdeckels 11 und des Filtereinsatzes 2 ergibt sich der Zustand gemäß Figur 13. Der Verschlusszapfen 3 wird durch seine Halteelemente 31 in seiner angehobenen Position axial gehalten, so dass der Ablasskanal 13 nun offen bleibt.

In Figur 14 ist das Detail W1 aus Figur 13 nochmals vergrößert dargestellt.

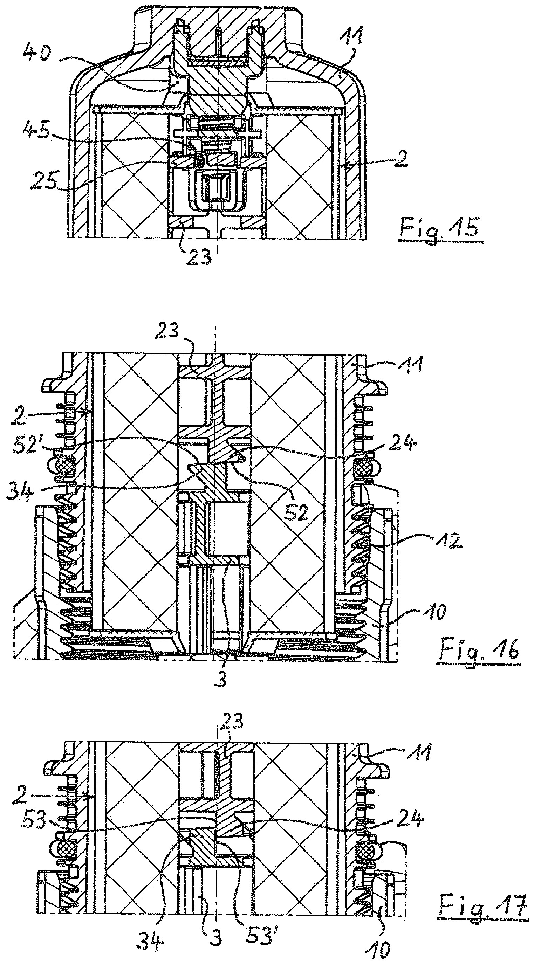

In den Figuren 15 bis 17 ist das Zusammenbauen des Flüssigkeitsfilters 1 nach einer Wartung veranschaulicht, wobei die zweiten Koppelelemente 25 und 45 gemäß Figur 15 und die ersten Koppelelemente 24 und 34 gemäß Figur 16 und 17 nach und nach in einen ein Drehmoment und eine axiale Schubkraft, nicht aber eine axiale Zugkraft übertragenden Eingriff gelangen.

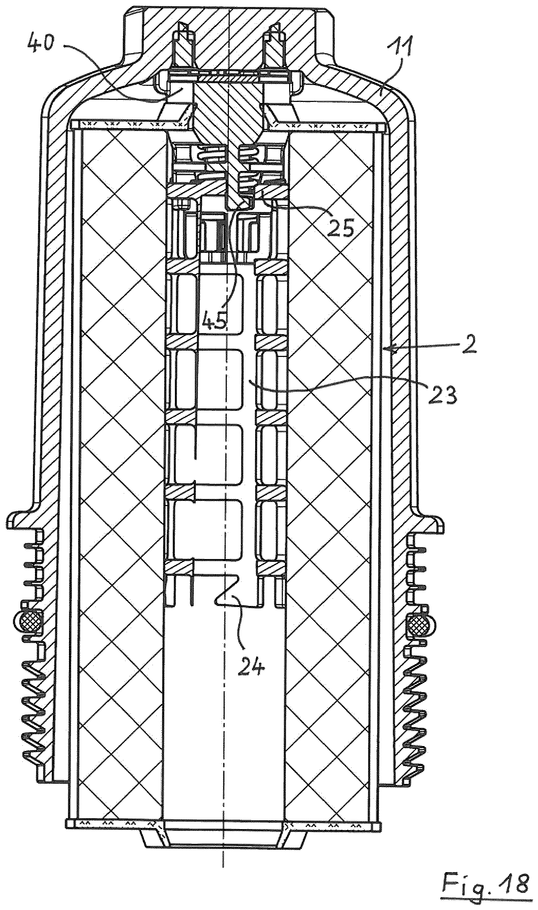

Figur 18 zeigt eine Einheit aus Schraubdeckel 11 sowie Filtereinsatz 2 mit Stützkörper 23. Der Stützkörper 23 ist mittels der zweiten Koppelelemente 21 in Eingriff mit den zweiten Koppelelementen 45 am Ventilgehäuse 40 in einen ein Drehmoment und eine axiale Schubkraft übertragenden Eingriff gebracht, der sich bei Drehen des Schraubdeckels 11 in seiner Festdrehrichtung ergibt. Am unteren Ende des Stützkörpers 23 sind die ersten Koppelelemente 24 sichtbar.

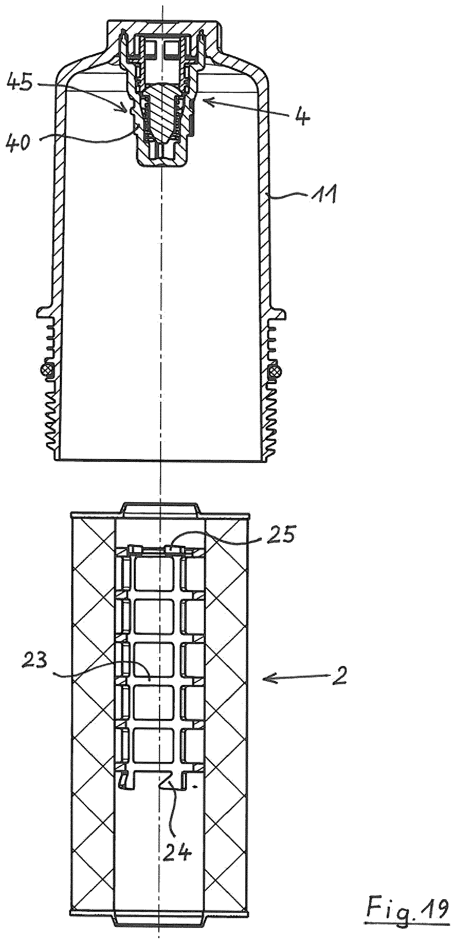

In Figur 19 sind der Schraubdeckel 11 mit dem daran fest angebauten Filterumgehungsventil 4 einerseits und der Filtereinsatz 2 mit dem darin angeordneten Stützkörper 23 andererseits als voneinander getrennte Einzelteile dargestellt. Am Außenumfang des Ventilgehäuses 40 sind die zweiten Koppelelemente 45 angeordnet. Am oberen Ende des Stützkörpers 23 sind die zweiten Koppelelemente 25 und am unteren Ende des Stützkörpers 23 sind die ersten Koppelelemente 24 sichtbar.

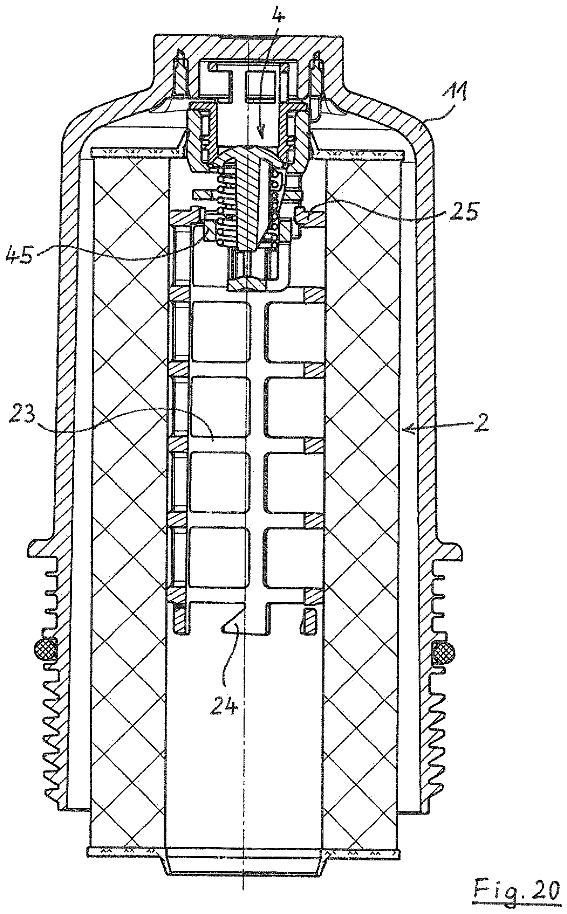

In Figur 20 ist der Filtereinsatz 2 zusammen mit dem Stützkörper 23 in den Schraubdeckel 11 eingesetzt und mittels der zweiten Koppelelemente 25 und 45 sind die beiden Teile nun für die gemeinsame Anbringung am Filtergehäuse 10 miteinander verbunden.

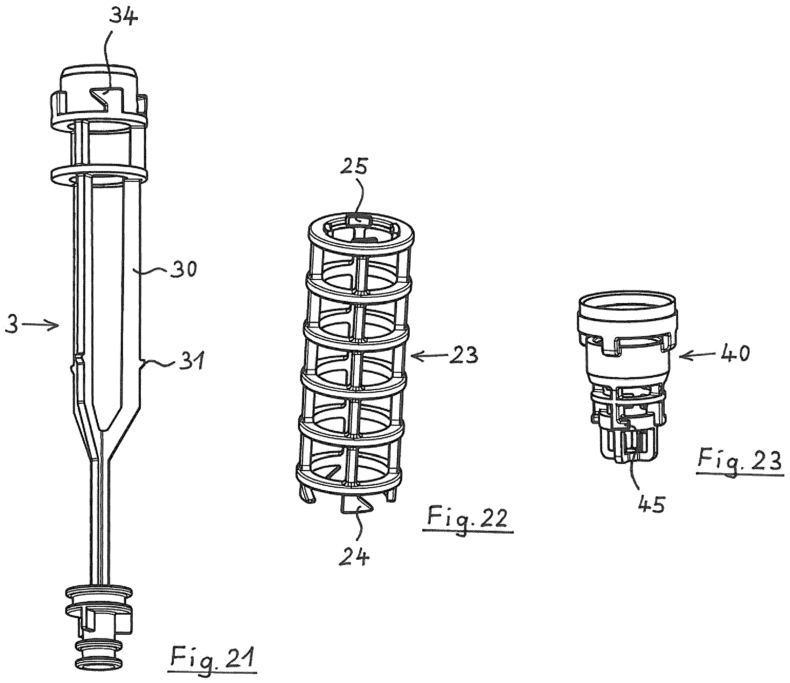

Figur 21 zeigt als Einzelteil in Ansicht den Verschlusszapfen 3, an dem oben die ersten Koppelelemente 34 sichtbar sind. In einem unteren Bereich des Führungsabschnitts 30 liegen die nasenförmigen Halteelemente 31. Ganz unten ist der Verschlusszapfen 3 mit zwei axial beabstandeten Nuten zur Aufnahme der hier nicht dargestellten Dichtringe ausgeführt.

Figur 22 zeigt als Einzelteil in Ansicht den Stützkörper 23, der unten die ersten Koppelelemente 24 und oben die zweiten Koppelelemente 25 aufweist.

Figur 33 zeigt in das Ventilgehäuse 40, an dem die zweiten Koppelelemente 45 angeordnet sind.

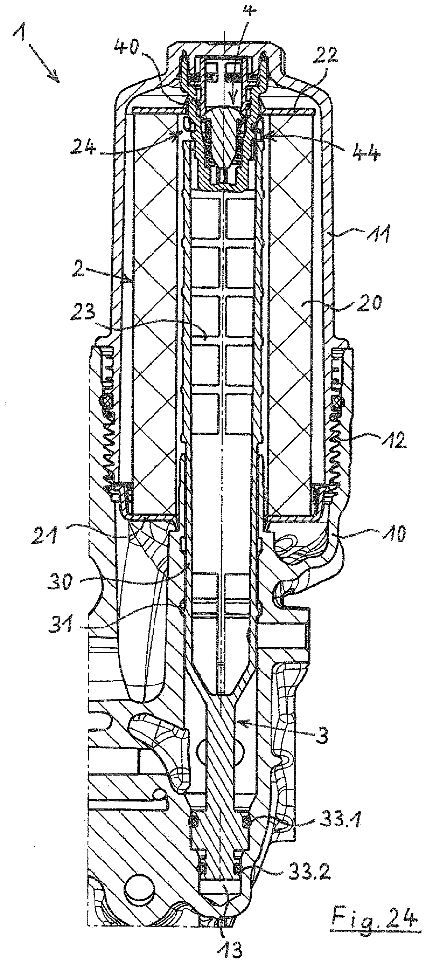

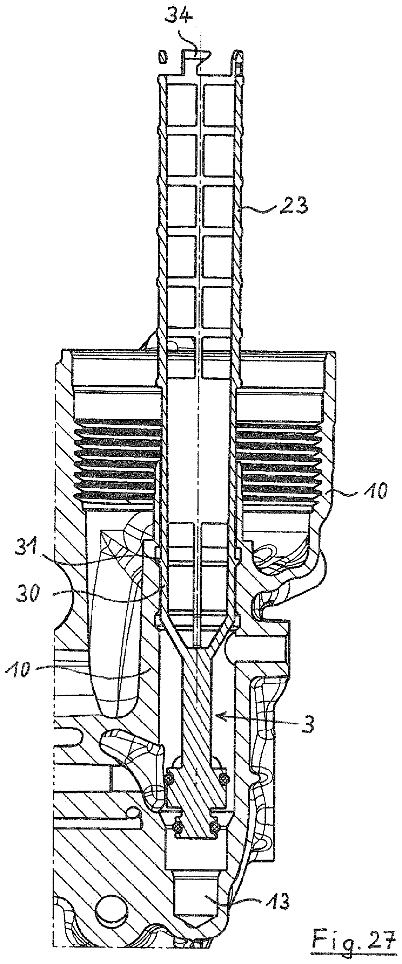

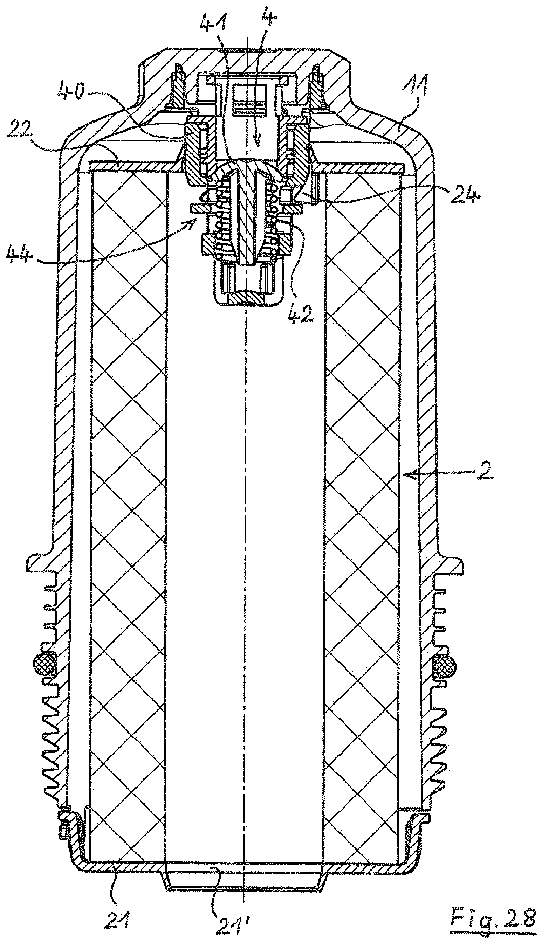

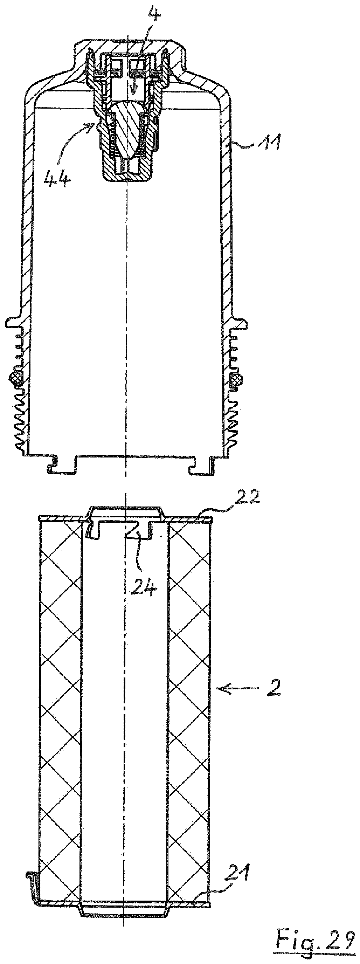

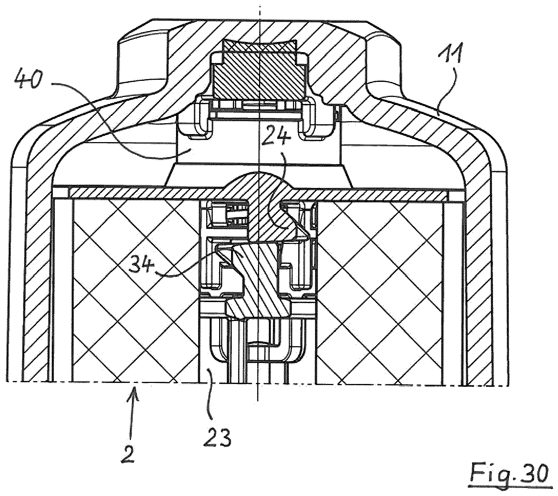

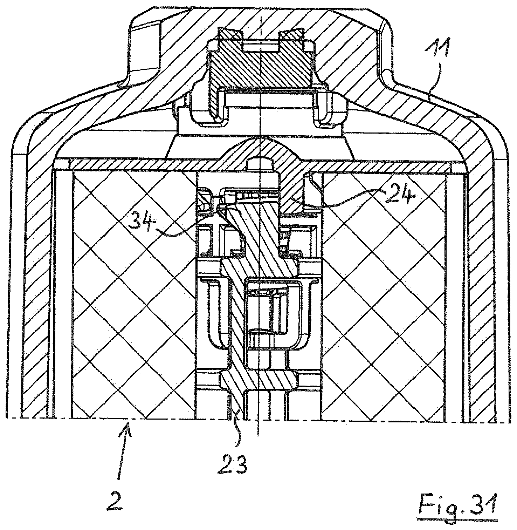

Die Figuren 24 bis 32 zeigen ein zweites Ausführungsbeispiel des Flüssigkeitsfilters 1 gemäß Erfindung. Von dem ersten Ausführungsbeispiel unterscheidet sich das zweite Ausführungsbeispiel dadurch, dass nun der Verschlusszapfen 3 mit dem Stützkörper 23 einstückig ausgeführt ist, wodurch der Stützkörper 23 ein dauerhaft im Filtergehäuse 10 verbleibendes Bauteil wird und nicht mehr Teil des auswechselbaren Filtereinsatzes 2 ist.

Aufgrund der Vereinigung von Verschlusszapfen 3 und Stützkörper 23 zu einem einstückigen Bauteil ist nun auch nur noch ein Paar von zusammenwirkenden Koppelelementen 24 und 44 erforderlich, die hier einerseits am oberen Ende des Stützkörpers 23 und andererseits am Ventilgehäuse 40 angeordnet sind.

In seinem sonstigen Aufbau und in seinen weiteren Funktionen stimmt der Flüssigkeitsfilter 1 mit dem zuvor schon erläuterten Ausführungsbeispiel überein, auf dessen Beschreibung verwiesen wird.

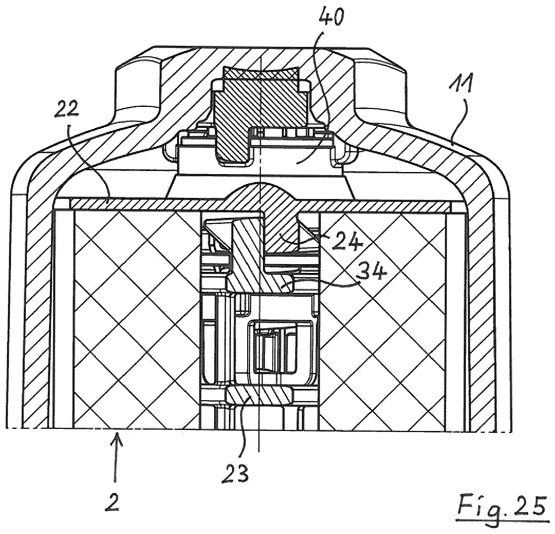

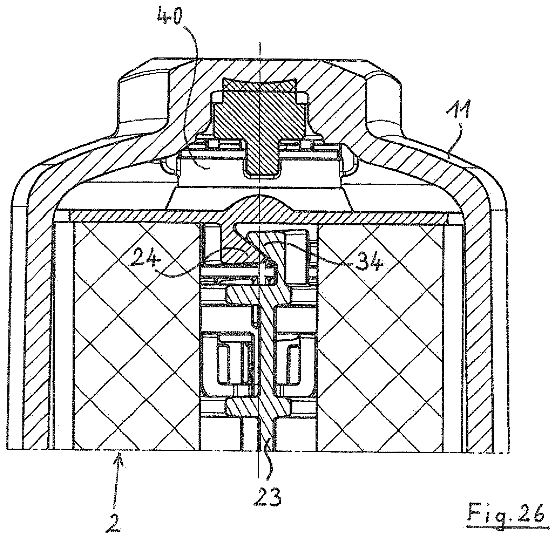

Gemäß den Figuren 25 und 26 können bei dem zweiten Ausführungsbeispiel auch Koppelelemente 24 an der Unterseite der oberen Endscheibe 22 des Filtereinsatzes 2 und Koppelelemente 34 am oberen Ende des Stützkörpers 23 angeformt sein. Die obere Endscheibe 23 des Filtereinsatzes 2 ist hier im Klemmsitz mit dem Ventilgehäuse 40 durch Aufstecken verbunden. Die Koppelelemente 24 und 34 entsprechen in ihrer Gestaltung und Funktion den anhand des ersten Ausführungsbeispiel erläuterten ersten Koppelelementen, treten also bei Festdrehen des Schraubdeckels 11 in einen ein Drehmoment und eine axiale Schubkraft übertragenden Eingriff und bei Losdrehen des Schraubdeckels 11 in einen ein Drehmoment und eine axiale Zugkraft übertragenden Eingriff, solange auf den Verschlusszapfen 3 durch dessen Dichtungen 33.1 und 33.2 im Ablasskanal 13 und/oder durch die Halteelemente 31 im Filtergehäuse 10 ein Bremsmoment auf den Verschlusszapfen 3 ausgeübt wird; sobald das auf den Verschlusszapfen 3 wirkende Bremsmoment wegfällt, weil der Verschlusszapfen 3 in Zugrichtung nach oben seine maximale Höhe erreicht hat, trennen sich, wie oben schon beschrieben, die Koppelelemente 24 und 34 selbsttätig voneinander.

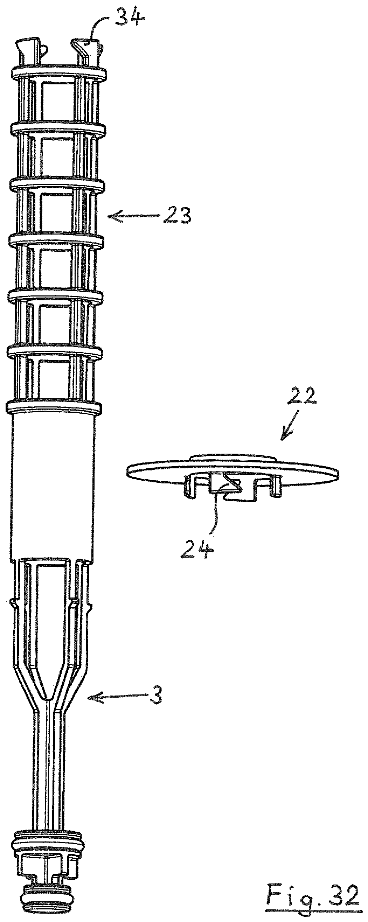

Diese Funktionen und das Zusammenwirken der verschiedenen Koppelelemente 24, 34 und 44 beim zweiten Ausführungsbeispiel sind in den weiteren Zeichnungsfiguren 28 bis 31 in verschiedenen Betriebszuständen in weiteren Schnittdarstellungen sowie in Figur 32 in einer Ansicht auf den Verschlusszapfen 3 und die obere Endscheibe 22 anschaulich weiter dargestellt.

**Bezugszeichenliste:**

| Zeichen | Bezeichnung |
|---|---|
| | |
| 1 | Flüssigkeitsfilter insgesamt |
| 10 | Filtergehäuse |
| 11 | Schraubdeckel |
| 12 | Schraubgewinde |
| 13 | Ablasskanal |
| 13.1, 13.2 | Abschnitte von 13 |
| | |
| 2 | Filtereinsatz |
| 20 | Filterstoffkörper |
| 21 | untere Endscheibe |
| 21' | zentrale Aufstecköffnung in 21 |
| 22 | obere Endscheibe |
| 23 | Stützkörper in 20 |
| 24 | erste Koppelelemente an 2 |
| 25 | zweite Koppelelemente an 2 |
| | |
| 3 | Verschlusszapfen |
| 30 | Führungsabschnitt in 13 |
| 31 | Halteelemente |
| 33.1, 33.2 | Dichtung(en) an 3 |
| 34 | erste Koppelelemente an 3 |
| | |
| 4 | Filterumgehungsventil |
| 40 | Ventilgehäuse |
| 41 | Ventilkörper |
| 42 | Ventilfeder |
| 44 | erste Koppelelemente an 4 |
| 45 | zweite Koppelelemente an 4 |
| 5, 5' | Zähne von 24, 34 |
| 51, 51' | schräge Zahnflanke |
| 52, 52' | Zahnflanke in Umfangsrichtung |
| 53, 53' | Zahnrücken |
| | |
| 6, 6' | Zähne von 25, 45 |
| 61, 61' | erste Zahnflanke in Umfangsrichtung |
| 62, 62' | zweite Zahnflanke in Umfangsrichtung |
| 63, 63' | Zahnrücken |
| 5, 5' | Zähne von 24, 34 |
| 51, 51' | schräge Zahnflanke |
| 52, 52' | Zahnflanke in Umfangsrichtung |
| 53, 53' | Zahnrücken |
| | |
| 6, 6' | Zähne von 25, 45 |
| 61, 61' | erste Zahnflanke in Umfangsrichtung |
| 62, 62' | zweite Zahnflanke in Umfangsrichtung |
| 63, 63' | Zahnrücken |

## Patentansprüche

1. Flüssigkeitsfilter (1), insbesondere Ölfilter einer Brennkraftmaschine, mit einem Filtergehäuse (10) mit einem abnehmbaren Schraubdeckel (11) und mit einem Rohflüssigkeitseinlass und einem Reinflüssigkeitsauslass, mit einem im Filtergehäuse (10) auswechselbar angeordneten, eine Rohseite und eine Reinseite des Flüssigkeitsfilters (1) voneinander trennenden Filtereinsatz (2), wobei das Filtergehäuse (10) weiter einen zentralen Ablasskanal (13) zum Entleeren des Filtergehäuses (10) bei einem Entnehmen des Filtereinsatzes (2) aufweist, wobei ein im Einbauzustand filtergehäusefester Verschlusszapfen (3) mit wenigstens einer in einem Dichtsitz in dem Ablasskanal (13) radial dichtenden Dichtung (33.1, 33.2) zwischen einer bei eingebautem Filtereinsatz (2) und geschlossenem Schraubdeckel (11) eingenommenen, unteren Schließstellung und einer bei abgenommenem Schraubdeckel (11) und entnommenem Filtereinsatz (2) eingenommenen, oberen Öffnungsstellung axial verstellbar ist, und wobei zwischen dem Schraubdeckel (11) oder Filtereinsatz (2) einerseits und dem Verschlusszapfen (3) andererseits mechanische, lösbare Koppelelemente (24, 34, 44) vorgesehen sind, **dadurch gekennzeichnet,**
- **dass** die Koppelelemente (24, 34, 44) eine Verzahnung bilden,
- **dass** die Zähne (5, 5') der jeweiligen Koppelelemente (24, 34, 44) in Umfangsrichtung in entgegengesetzte Richtungen weisen und
- **dass** in Umfangsrichtung gesehen der Zahnabstand (a₁) jeweils größer ist als die Zahnlänge (l₁),
- wobei die Koppelelemente (24, 34, 44) durch Drehen des Schraubdeckels (11) oder Filtereinsatzes (2) in Festdrehrichtung des Schraubdeckels (11) in einen ein Drehmoment und eine Schubkraft übertragenden Eingriff treten,
- wobei die Koppelelemente (24, 34, 44) durch Drehen des Schraubdeckels (11) oder Filtereinsatzes (2) in Losdrehrichtung des Schraubdeckels (11) in einen ein Drehmoment und eine Zugkraft übertragenden Eingriff treten, solange sich die Dichtung (33.1, 33.2) ein Bremsmoment auf den Verschlusszapfen (3) ausübend im Dichtsitz befindet, und
- wobei die Koppelelemente (24, 34, 44) selbsttätig außer Eingriff treten, wenn die Dichtung (33.1, 33.2) aus dem Dichtsitz ausgetreten und dadurch der Verschlusszapfen (3) frei um seine Längsachse drehbar ist.

2. Flüssigkeitsfilter nach Anspruch 1, **dadurch gekennzeichnet, dass** in Radialrichtung betrachtet die Zähne (5, 5') jeweils asymmetrische Zahnflanken haben, wobei die jeweils zusammenwirkenden Zahnflanken (51, 51') in einem ersten Winkel (α₁) schräg zur Umfangsrichtung, die jeweils anderen Zahnflanken (52, 52') in einem zweiten, kleineren Winkel (α₂) zur Umfangsrichtung und die Zahnrücken (53, 53') in Axialrichtung verlaufen.

3. Flüssigkeitsfilter nach Anspruch 2, **dadurch gekennzeichnet, dass** der erste Winkel (α₁) zwischen 30° und 60° beträgt.

4. Flüssigkeitsfilter nach Anspruch-2 oder 3, **dadurch gekennzeichnet, dass** der zweite Winkel (α₂) gleich oder größer der Gewindesteigung des Schraubdeckels (11) ist.

5. Flüssigkeitsfilter nach einem der Ansprüche 1 bis 4, **dadurch gekennzeichnet, dass** die Zähne (5, 5') der Verzahnungen jeweils auf zumindest bereichsweise identischen Durchmessern einerseits axial nach unten oder radial nach außen oder innen von dem Schraubdeckel (11) oder dem Filtereinsatz (2) und andererseits entsprechend axial nach oben oder radial nach innen oder außen von dem Verschlusszapfen (3) vorragen.

6. Flüssigkeitsfilter nach einem der Ansprüche 1 bis 5, **dadurch gekennzeichnet, dass** der Verschlusszapfen (3) mit federnden Halteelementen (31) ausgestattet ist, die in Öffnungsstellung des Verschlusszapfens (3) ausgefedert sind und den Verschlusszapfen (3) im Ablasskanal (13) in Axialrichtung halten, die beim Übergang des Verschlusszapfens (3) von seiner Öffnungsstellung in seine Schließstellung und umgekehrt vorübergehend einfederbar sind und dabei in einen Reibschluss mit dem Filtergehäuse (10) treten und die in Schließstellung des Verschlusszapfens (3) wieder ausgefedert sind.

7. Flüssigkeitsfilter nach einem der Ansprüche 1 bis 6, **dadurch gekennzeichnet, dass** der Filtereinsatz (2) einen zentralen Stützkörper (23) aufweist und dass die filtereinsatzseitigen Koppelelemente (24) am unteren Ende des Stützkörpers (23) angeordnet sind.

8. Flüssigkeitsfilter nach einem der Ansprüche 1 bis 6, **dadurch gekennzeichnet, dass** der Verschlusszapfen (3) mit einem Stützkörper (23) für den Filterstoffkörper (20) des Filtereinsatzes (2) dauerhaft verbunden oder einstückig ausgeführt ist und dass die Koppelelemente (24, 44) einerseits oben am Stützkörper (23) und andererseits am Schraubdeckel (11) angeordnet sind.

9. Flüssigkeitsfilter nach einem der Ansprüche 1 bis 7, **dadurch gekennzeichnet, dass** in dem Schraubdeckel (11) ein deckelfestes Filterumgehungsventil (4) angeordnet ist und dass zwischen dem Filterumgehungsventil (4) oder dem Schraubdeckel (11) einerseits und dem Filtereinsatz (2), insbesondere einem darin angeordneten Stützkörper (23), andererseits zweite mechanische, lösbare Koppelelemente (25, 45) vorgesehen sind.

10. Flüssigkeitsfilter nach Anspruch 9, **dadurch gekennzeichnet, dass** die zweiten Koppelelemente (25, 45) durch Drehen des Schraubdeckels (11) in dessen Festdrehrichtung in einen ein Drehmoment und eine Schubkraft übertragenden Eingriff und durch Drehen des Schraubdeckels (11) in dessen Losdrehrichtung in einen ein Drehmoment und eine Zugkraft übertragenden Eingriff treten.

11. Flüssigkeitsfilter nach Anspruch 10, **dadurch gekennzeichnet, dass** die zweiten Koppelelemente (25, 45) eine Verzahnung bilden, wobei die Zähne (6, 6') der jeweiligen Koppelelemente (25, 45) in Umfangsrichtung in entgegengesetzte Richtungen weisen und wobei in Umfangsrichtung gesehen der Zahnabstand (a₂) jeweils größer ist als die Zahnlänge (l₂).

12. Flüssigkeitsfilter nach Anspruch 10 oder 11, **dadurch gekennzeichnet, dass** in Radialrichtung betrachtet die Zähne (6, 6') der zweiten Koppelelemente (25, 45) jeweils asymmetrische Zahnflanken haben, wobei die jeweils zusammenwirkenden Zahnflanken (61, 61') im Wesentlichen in Umfangsrichtung, die jeweils anderen Zahnflanken (62, 62') in einem Winkel (α₃) zur Umfangsrichtung und die Zahnrücken (63, 63') in Axialrichtung verlaufen.

13. Flüssigkeitsfilter nach Anspruch 12, **dadurch gekennzeichnet, dass** der Winkel (α₃) gleich oder größer der Gewindesteigung des Schraubdeckels (11) ist.

14. Flüssigkeitsfilter nach einem der Ansprüche 9 bis 13, **dadurch gekennzeichnet, dass** die zweiten Koppelelemente (25, 45) gleichzeitig als in Umfangsrichtung wirkende Rastelemente ausgebildet sind, deren Rastmoment kleiner ist als ein Bremsmoment des in Schließstellung befindlichen Verschlusszapfens (3).

15. Flüssigkeitsfilter nach einem der Ansprüche 1 bis 5 oder nach einem der Ansprüche 11 bis 13, **dadurch gekennzeichnet, dass** die Verzahnungen der Koppelelemente (24, 34; 25,45) jeweils zwei bis sechs, vorzugsweise jeweils vier, über den Umfang verteilte Zähne (5, 5'; 6, 6') aufweisen.

16. Filtereinsatz (2) für einen Flüssigkeitsfilter (1) nach einem der Ansprüche 1 bis 15, wobei der Filtereinsatz (2) in das mit einem abnehmbaren Schraubdeckel (11) und mit einem Rohflüssigkeitseinlass und einem Reinflüssigkeitsauslass ausgeführte Filtergehäuse (10) des Flüssigkeitsfilters (1) auswechselbar und im Einbauzustand eine Rohseite und eine Reinseite des Flüssigkeitsfilters (1) voneinander trennend einbaubar ist und wobei an dem Filtereinsatz (2) mechanische erste Koppelelemente (24) zum lösbaren Verbinden mit zweiten Koppelelementen (34) an einem im Einbauzustand filtergehäusefesten Verschlusszapfen (3) vorgesehen sind, der in dem zentralen Ablasskanal (13) des Filtergehäuses (10) angeordnet und mit der wenigstens einen in einem Dichtsitz in dem Ablasskanal (13) radial dichtenden Dichtung (33.1, 33.2) versehen ist und der zwischen einer bei eingebautem Filtereinsatz (2) und geschlossenem Schraubdeckel (11) eingenommenen, unteren Schließstellung und einer bei abgenommenem Schraubdeckel (11) und entnommenem Filtereinsatz (2) eingenommenen, oberen Öffnungsstellung zu einem Entleeren des Filtergehäuses (10) bei einem Entnehmen des Filtereinsatzes (2) axial verstellbar ist,
**dadurch gekennzeichnet,**
- **dass** die ersten Koppelelemente (24) am Filtereinsatz (2) eine erste Verzahnung bilden, die mit der durch die zweiten Koppelelemente (34) am Verschlusszapfen (3) gebildeten zweiten Verzahnung zusammenwirken kann,
- wenn die Zähne (5) der ersten Koppelelemente (24) in Umfangsrichtung in eine zu den Zähnen (5') der zweiten Koppelelemente (34) entgegengesetzte Richtung weisen und
- wenn in Umfangsrichtung gesehen die Zahnlänge (l₁) der Zähne (5) der ersten Koppelelemente (24) kleiner ist als der Zahnabstand (a₁) der Zähne (5') der zweiten Koppelelemente (34),
- wobei die Koppelelemente (24) des Filtereinsatzes (2) durch Drehen des Schraubdeckels (11) und/oder Filtereinsatzes (2) in Festdrehrichtung des Schraubdeckels (11) in einen ein Drehmoment und eine Schubkraft übertragenden Eingriff mit den Koppelelementen (34) des Verschlusszapfens (3) bringbar sind,
- wobei die Koppelelemente (24) des Filtereinsatzes (2) durch Drehen des Schraubdeckels (11) und/oder Filtereinsatzes (2) in Losdrehrichtung des Schraubdeckels (11) in einen ein Drehmoment und eine Zugkraft übertragenden Eingriff mit den Koppelelementen (34) des Verschlusszapfens (3) bringbar sind, solange sich die Dichtung (33.1, 33.2) ein Bremsmoment auf den Verschlusszapfen (3) ausübend im Dichtsitz befindet, und
- wobei die Koppelelemente (24) des Filtereinsatzes (2) selbsttätig außer Eingriff von den Koppelelementen (34) des Verschlusszapfens (3) bringbar sind, wenn die radial dichtende Dichtung (33.1, 33.2) des Verschlusszapfens (3) aus dem Dichtsitz ausgetreten und dadurch der Verschlusszapfen (3) frei um seine Längsachse drehbar ist.

17. Filtereinsatz nach Anspruch 16, **dadurch gekennzeichnet, dass** in Radialrichtung betrachtet die Zähne (5) asymmetrische Zahnflanken haben, wobei jeweils die eine Zahnflanke (51) in einem ersten Winkel (α₁) schräg zur Umfangsrichtung, die andere Zahnflanke (52) in einem zweiten, kleineren Winkel (α₂) zur Umfangsrichtung und der Zahnrücken (53) in Axialrichtung verläuft.

18. Filtereinsatz nach Anspruch 17, **dadurch gekennzeichnet, dass** der erste Winkel (α₁) zwischen 30° und 60° beträgt.

19. Filtereinsatz nach einem der Ansprüche 16 bis 18, **dadurch gekennzeichnet, dass** die filtereinsatzseitigen Zähne (5) der Verzahnung axial nach unten oder radial nach außen oder radial nach innen von dem Filtereinsatz (2) vorragen.

20. Filtereinsatz nach einem der Ansprüche 16 bis 19, **dadurch gekennzeichnet, dass** er einen zentralen Stützkörper (23) aufweist und dass die filtereinsatzseitigen Koppelelemente (24) am unteren Ende des Stützkörpers (23) angeordnet sind.

21. Filtereinsatz nach einem der Ansprüche 16 bis 18, **dadurch gekennzeichnet, dass** oben an dem Filtereinsatz (2), insbesondere einem darin angeordneten Stützkörper (23), zweite mechanische, lösbare Koppelelemente (25) zur Kopplung mit zweiten Koppelelementen (45) an einem in dem Schraubdeckel (11) deckelfest angeordneten Filterumgehungsventil (4) vorgesehen sind.

22. Filtereinsatz nach Anspruch 21, **dadurch gekennzeichnet, dass** die zweiten Koppelelemente (25) durch Drehen des Schraubdeckels (11) in dessen Festdrehrichtung in einen ein Drehmoment und eine Schubkraft übertragenden Eingriff und durch Drehen des Schraubdeckels (11) in dessen Losdrehrichtung in einen ein Drehmoment und eine Zugkraft übertragenden Eingriff mit den zweiten Koppelelementen (45) des Filterumgehungsventils (4) bringbar sind.

23. Filtereinsatz nach Anspruch 22, **dadurch gekennzeichnet, dass** die zweiten Koppelelemente (25) des Filtereinsatzes (2) eine Verzahnung mit in Umfangsrichtung weisenden Zähnen (6') bilden, wobei in Umfangsrichtung gesehen deren Zahnabstand (a₂) jeweils größer ist als deren Zahnlänge (l₂).

24. Filtereinsatz nach Anspruch 23, **dadurch gekennzeichnet, dass** in Radialrichtung betrachtet die Zähne (6) der zweiten Koppelelemente (25) asymmetrische Zahnflanken haben, wobei jeweils die eine Zahnflanke (61) im Wesentlichen in Umfangsrichtung, die jeweils andere Zahnflanke (62) in einem Winkel (α₃) zur Umfangsrichtung und der Zahnrücken (63) in Axialrichtung verläuft.

25. Filtereinsatz nach einem der Ansprüche 16 bis 19 oder nach einem der Ansprüche 23 und 24 **dadurch gekennzeichnet, dass** die Verzahnungen der Koppelelemente (24, 25) jeweils zwei bis sechs, vorzugsweise jeweils vier, über den Umfang verteilte Zähne (5, 6) aufweisen.

26. Filtereinsatz nach einem der Ansprüche 23 bis 25, **dadurch gekennzeichnet, dass** die zweiten Koppelelemente (25) gleichzeitig als in Umfangsrichtung wirkende Rastelemente ausgebildet sind, deren Rastmoment im Zusammenwirken mit den zweiten Koppelelementen (45) des Filterumgehungsventils (4) kleiner ist als ein Bremsmoment des in Schließstellung befindlichen Verschlusszapfens (3).

## Claims

1. Liquid filter (1), particularly an oil filter of an internal combustion engine, with a filter housing (10) with a removable screw cap (11) and with a raw-liquid inlet and a clean-liquid outlet, with a filter insert (2) separating dirty side and clean side of the liquid filter (1) interchangeably arranged in the filter housing (10), whereby the filter housing (10) furthermore has a central drain channel (13) for draining the filter housing (10) during removal of the filter insert (2), whereby a closure pin (3) permanently installed in the filter housing having at least one radially sealing seal (33.1, 33.2) in a sealing seat in the drain channel (13) is axially adjustable between a lower closed position when the filter insert (2) is built in and the screw cap (11) is closed, and an upper open position when the screw cap (11) is taken off and the filter insert (2) is removed, and wherein mechanical, releasable coupling elements (24, 34, 44) are provided between the screw cap (11) or filter insert (2) on the one hand and the closure pin (3) on the other hand,
**characterised in**
- **that** the coupling elements (24, 34, 44) form a toothing,
- **that** the teeth (5, 5') of the respective coupling elements (24, 34, 44) in the circumferential direction are oriented in opposing directions and
- **that** when viewed in the circumferential direction the tooth spacing (a₁) is in each case greater than the tooth length (l₁),
- whereby turning the screw cap (11) or the filter insert (2) in the tightening direction of the screw cap (11) results in a torque and a thrust-transmitting engagement of the coupling elements (24, 34, 44),
- whereby turning the screw cap (11) or the filter insert (2) in the loosening direction of the screw cap (11) results in a torque and a tensile force-transmitting engagement of the coupling elements (24, 34, 44) as long as the seal (33.1, 33.2) exerts a braking torque on the closure pin (3) located in the sealing seat, and
- whereby the coupling elements (24, 34, 44) automatically disengage when the seal (33.1, 33.2) exits the sealing seat and thereby enables the closure pin (3) to freely rotate around its longitudinal axis.

2. Liquid filter according to Claim 1, **characterized in that** viewed in the radial direction each of the teeth (5, 5') have asymmetric tooth flanks, whereby said cooperating tooth flanks (51, 51') extend obliquely in a first angle (α₁) to the circumferential direction, the respective other tooth flanks (52, 52') extend in a second, smaller angle (α₂) to the circumferential direction and the teeth backs (53, 53') extend in the axial direction.

3. Liquid filter according to Claim 2, **characterized in that** the first angle (α₁) is between 30° and 60°.

4. Liquid filter according to Claim-2 or 3, **characterized in that** the second angle (α₂) is equal or greater than the thread pitch of the screw cap (11).

5. Liquid filter according to one of the Claims 1 to 4, **characterized in that** the teeth (5, 5') of the toothings each on at least region-wise identical diameters on the one hand protrude axially downward or radially outward or inward from the screw cap (11) or the filter insert (2) and on the other hand correspondingly protrude axially upward or radially inwardly or outwardly from the closure pin (3).

6. Liquid filter according to one of the Claims 1 to 5, **characterized in that** the closure pin (3) is equipped with resilient retaining elements (31), which are decompressed in the open position of the closure pin (3) and hold the closure pin (3) in the drain channel (13) in the axial direction, which are temporarily compressible during the transition of the closure pin (3) from its open position into its closed position and vice versa and thereby result in a frictional closure with the filter housing (10), and which are once again decompressed in the closed position of the closure pin (3).

7. Liquid filter according to one of the Claims 1 to 6, **characterized in that** the filter insert (2) has a central support body (23) and that the filter insert-side coupling elements (24) are arranged at the lower end of the support body (23).

8. Liquid filter according to one of the Claims 1 to 6, **characterized in that** the closure pin (3) is permanently connected or implemented as one piece with a support body (23) for the filter material body (20) of the filter insert (2) and that the coupling elements (24, 44) are on the one hand arranged on top at the support body (23) and on the other hand at the screw cap (11).

9. Liquid filter according to one of the Claims 1 to 7, **characterized in that** a filter bypass valve (4) is permanently fixed in the screw cap (11) and that the second mechanical, releasable coupling elements (25, 45) are provided between the filter bypass valve (4) or the screw cap (11) on the one hand and the filter insert (2), in particular a therein arranged support body (23), on the other hand.

10. Liquid filter according to Claim 9, **characterized in that** turning the screw cap (11) in the tightening direction results in a torque and a thrust-transmitting engagement and that turning the screw cap (11) in the loosening direction results in a torque and a tensile force-transmitting engagement of the second coupling elements (25, 45).

11. Liquid filter according to Claim 10, **characterized in that** the second coupling elements (25, 45) form a toothing, whereby the teeth (6, 6') of the said coupling elements (25, 45) in the circumferential direction are oriented in opposing directions and whereby when viewed in the circumferential direction the tooth spacing (a₂) is in each case greater than the tooth length (l₂).

12. Liquid filter according to Claim 10 or 11, **characterized in that** when viewed in the radial direction each of the teeth (6, 6') of the second coupling elements (25, 45) have asymmetric tooth flanks, whereby the respective cooperating tooth flanks (61, 61') essentially extend in the circumferential direction, the respective other tooth flanks (62, 62') extend at an angle (α₃) to the circumferential direction and the tooth backs (63, 63') extend in the axial direction.

13. Liquid filter according to Claim 12, **characterized in that** the angle (α₃) is equal or greater than the thread pitch of the screw cap (11).

14. Liquid filter according to one of the Claims 9 to 13, **characterized in that** the second coupling elements (25, 45) are designed simultaneously as latching elements acting in the circumferential direction whose cogging torque is smaller than a braking torque of the closure pin (3) located in the closed position.

15. Liquid filter according to one of the Claims 1 to 5 or one of the Claims 11 to 13, **characterized in that** each of the toothings of the coupling elements (24, 34; 25, 45) has two to six, preferably four, teeth (5, 5'; 6, 6') distributed over the circumference.

16. Filter insert (2) for a liquid filter (1) according to one of the Claims 1 to 15, whereby the filter insert (2) can be replaceably mounted in the filter housing (10) of the liquid filter (19) designed with a removable screw cap (11) and with a raw-liquid inlet and a clean-liquid outlet, and in the installed state separating a dirty side and clean side of the liquid filter (1) from each other, and wherein mechanical first coupling elements (24) are provided on the filter insert (2) for releasable connection with second coupling elements (34) on a closure pin (3) permanently built into the filter housing in the installed state, which pin (3) is arranged in the central drain channel (13) of the filter housing (10) and is provided with at least one radially-sealing seal (33.1, 33.2) in a sealing seat in the drain channel (13) and which can be axially adjusted between a lower closed position taken in when the filter insert (2) is installed and the screw cap (11) is closed and a upper open position taken in when the screw cap (11) is taken off and the filter insert (2) is removed for emptying the filter housing (10) during removal of the filter insert (2),
**characterised in**
- **that** the first coupling elements (24) on the filter insert (2) form a first toothing, which can cooperate with the second toothing formed by the second coupling elements (34) on the closure pin (3),
- if the teeth (5) of the first coupling elements (24) in the circumferential direction are oriented in the opposite direction to the teeth (5') of the second coupling elements (34) and
- if the tooth length (l₁) of the teeth (5) of the first coupling elements (24) are smaller than the tooth spacing (a₁) of the teeth (5') of the second coupling elements (34) when viewed in the circumferential direction,
- whereby the coupling elements (24) of the filter insert (2) can be brought into a torque and a thrust-transmitting engagement with the coupling elements (34) of the closure pin (3) by turning of the screw cap (11) and/or filter insert (2) in the tightening direction of the screw cap (11),
- whereby the coupling elements (24) of the filter insert (2) can be brought into a torque and a tensile force-transmitting engagement of the coupling elements (34) of the closure pin (3) by turning the screw cap (11) or filter insert (2) in the loosening direction of the screw cap (11) as long as the seal (33.1, 33.2) located in the sealing seat exerts a braking torque on the closure pin (3), and
- whereby the coupling elements (24) of the filter insert (2) can be brought into an automatic disengagement from the coupling elements (34) of the closure pin (3) when the radially-sealing seal (33.1, 33.2) of the closure pin (3) exits the sealing seat and thereby enables the closure pin (3) to freely rotate around its longitudinal axis.

17. Filter insert according to Claim 16, **characterized in that** viewed in the radial direction the teeth (5) have asymmetric tooth flanks, whereby each tooth flank (51) extends obliquely in a first angle (α₁) to the circumferential direction, the other tooth flank (52) extends in a second, smaller angle (α₂) to the circumferential direction and the teeth backs (53) extend in the axial direction.

18. Filter insert according to Claim 17, **characterized in that** the first angle (α₁) is between 30° and 60°.

19. Filter insert according to Claims 16 to 18, **characterized in that** the filter insert-side teeth (5) of the toothing protrude axially downward or radially outward or radially inward from the filter insert (2).

20. Filter insert according to one of the Claims 16 to 19, **characterized in that** it has a central support body (23) and that the filter insert-side coupling elements (24) are arranged at the lower end of the support body (23).

21. Filter insert according to one of the Claims 16 to 18, **characterized in that** the top of the filter insert (2), particularly a support body (23) arranged therein, is provided with second mechanical, releasable coupling elements (25) for coupling with the second coupling elements (45) on a filter bypass valve (4) permanently installed in the screw cap (11).

22. Filter insert according to Claim 21, **characterized in that** turning of the screw cap (11) in its tightening direction can bring the second coupling elements (25) into a torque and a thrust-transmitting engagement and that turning of the screw cap (11) in its loosening direction can result in a torque and a tensile force-transmitting engagement with the second coupling elements (45) of the filter bypass valve (4).

23. Filter insert according to Claim 22, **characterized in that** the second coupling elements (25) of the filter insert (2) form a toothing with the teeth (6') pointing in the circumferential direction, whereby the tooth spacing (a₂) of each of these is greater than the tooth length (l₂) of these when viewed in the circumferential direction.

24. Filter insert according to Claim 23, **characterized in that** when viewed in the radial direction the teeth (6) of the second coupling elements (25) have asymmetric tooth flanks, whereby each tooth flank (61) essentially extends in the circumferential direction, the respective other tooth flank (62) extends at an angle (α₃) to the circumferential direction and the tooth backs (63) extend in the axial direction.

25. Filter insert according to one of the Claims 16 to 19 or one of the Claims 23 and 24, **characterized in that** each of the toothings of the coupling elements (24, 25) has two to six, preferably four, teeth (5, 6) distributed over the circumference.

26. Filter insert according to one of the Claims 23 to 25, **characterized in that** the second coupling elements (25) are designed simultaneously as latching elements acting in the circumferential direction whose cogging torque in cooperation with the second coupling elements (45) of the filter bypass valve (4) is smaller than a braking torque of the closure pin (3) located in the closed position.

## Revendications

1. Filtre à liquides (1), en particulier filtre à huile d'un moteur à combustion interne, avec un boîtier de filtre (10) avec un couvercle vissé (11) amovible et avec une entrée de liquide brut et une sortie de liquide purifié, avec un élément filtrant (2) séparant un côté brut et un côté propre du filtre à liquides (1), disposé de manière échangeable dans le boîtier de filtre, où le boîtier de filtre (10) comporte en outre un canal d'évacuation central (13) pour vider le boîtier de filtre (10) lors de l'extraction de l'élément filtrant (2), où un tenon de fermeture (3) fixé, à l'état monté, sur le boîtier de filtre, avec au moins un joint d'étanchéité (33.1, 33.2) assurant une étanchéité radiale dans un siège d'étanchéité du canal d'évacuation (13), peut être déplacé axialement entre une position de fermeture inférieure prise lorsque l'élément filtrant (2) est monté et que le couvercle (11) est fermé, et une position d'ouverture supérieure prise lorsque le couvercle (11) est enlevé et l'élément filtrant (2) est retiré, et où des éléments de couplage (24, 34, 44) mécaniques libérables sont situés entre le couvercle vissé (11) ou l'élément filtrant (2) d'un côté et le tenon de fermeture (3) de l'autre côté,
**caractérisé en ce**
- **que** les éléments de couplage (24, 34, 44) forment une denture,
- **que** les dents (5, 5') des éléments de couplage (24, 34, 44) respectifs sont orientées dans des directions opposées dans la direction circonférentielle et
- **que** l'espacement de dents (a₁), vu dans la direction circonférentielle, est toujours plus grand que la longueur de dent (l₁),
- où les éléments de couplage (24, 34, 44) entrent en prise transmettant un couple et une force de poussée par la rotation du couvercle vissé (11) ou de l'élément filtrant (2) dans le sens de vissage du couvercle vissé (11),
- où les éléments de couplage (24, 34, 44) entrent en prise transmettant un couple et une force de traction par la rotation du couvercle vissé (11) ou de l'élément filtrant (2) dans le sens de dévissage du couvercle vissé, tant que le joint d'étanchéité (33.1, 33.2) se trouve dans le siège d'étanchéité, exerçant un couple de freinage sur le tenon de fermeture (3), et
- où les éléments de couplage (24, 34, 44) sortent automatiquement de prise, lorsque le joint d'étanchéité (33.1, 33.2) sort du siège d'étanchéité, ce qui permet au tenon de fermeture (3) de tourner librement autour de son axe longitudinal.

2. Filtre à liquides selon la revendication 1, **caractérisé en ce que** les dents (5, 5'), vues dans la direction radiale, ont toujours des flancs de dent asymétriques, où les flancs de dent coopérants respectivement (51, 51') s'étendent suivant un premier angle (α₁) obliquement par rapport à la direction circonférentielle, les autres flancs de dent (52, 52') s'étendent suivant un second angle (α₂) plus petit par rapport à la direction circonférentielle, et les dos de dent (53, 53') s'étendent en direction axiale.

3. Filtre à liquides selon la revendication 2, **caractérisé en ce que** le premier angle (α₁) est compris entre 30° et 60°.

4. Filtre à liquides selon la revendication 2 ou 3, **caractérisé en ce que** le second angle (α₂) est égal ou supérieur au pas de filetage du couvercle vissé (11).

5. Filtre à liquides selon l'une quelconque des revendications 1 à 4, **caractérisé en ce que** les dents (5, 5') de la denture font saillie, sur des diamètres identiques au moins par zones, d'un côté axialement vers le bas ou radialement vers l'extérieur ou l'intérieur du couvercle vissé (11) ou de l'élément filtrant (2) et d'un autre côté conformément axialement vers le haut ou radialement vers l'intérieur ou l'extérieur du tenon de fermeture (3).

6. Filtre à liquides selon l'une quelconque des revendications 1 à 5, **caractérisé en ce que** le tenon de fermeture (3) est muni d'éléments de soutien élastiques (31), qui sont détendus dans la position d'ouverture du tenon de fermeture (3) et maintiennent le tenon de fermeture (3) en direction axiale dans le canal d'évacuation (13), qui peuvent être détendus lors de la transition du tenon de fermeture (3) de sa position d'ouverture à sa position de fermeture et réciproquement peuvent être contractés temporairement et entrent, ce faisant, en liaison par frottement avec le boîtier de filtre (10), et qui sont de nouveau détendus dans la position de fermeture du tenon de fermeture (3).

7. Filtre à liquides selon l'une quelconque des revendications 1 à 6, **caractérisé en ce que** l'élément filtrant (2) comprend un support central (23) et que les éléments de couplage (24) du côté de l'élément filtrant sont disposés à l'extrémité inférieure du support (23).

8. Filtre à liquides selon l'une quelconque des revendications 1 à 6, **caractérisé en ce que** le tenon de fermeture (3) est connecté durablement ou réalisé d'une seule pièce avec un support (23) pour le corps de matière filtrante (20) de l'élément filtrant (2) et que les éléments de couplage (24, 44) sont disposés d'un côté au haut sur le support (23) et d'un autre côté sur le couvercle vissé (11).

9. Filtre à liquides selon l'une quelconque des revendications 1 à 7, **caractérisé en ce qu'**un clapet de dérivation de filtre (4) solidaire du couvercle est disposé dans le couvercle vissé (11) et que des seconds éléments de couplage (25, 45) mécaniques libérables sont situés entre le clapet de dérivation de filtre (4) ou le couvercle vissé (11) d'un côté et l'élément filtrant (2), en particulier un support (23) qui y est disposé, d'un autre côté.

10. Filtre à liquides selon la revendication 9, **caractérisé en ce que** les seconds éléments de couplage (25, 45) entrent en prise transmettant un couple et une force de poussée par la rotation du couvercle vissé (11) dans son sens de vissage et entrent en prise transmettant un couple et une force de traction par la rotation du couvercle vissé (11) dans son sens de dévissage.

11. Filtre à liquides selon la revendication 10, **caractérisé en ce que** les seconds éléments de couplage (25, 45) forment une denture, où les dents (6, 6') des éléments de couplage (25, 45) respectifs sont orientées dans des directions opposées dans la direction circonférentielle et où l'espacement de dents (a₂), vu dans la direction circonférentielle, est toujours plus grand que la longueur de dent (l₂).

12. Filtre à liquides selon la revendication 10 ou 11, **caractérisé en ce que** les dents (6, 6') des seconds éléments de couplage (25, 45), vues dans la direction radiale, ont toujours des flancs de dent asymétriques, où les flancs de dent coopérants respectivement (61, 61') s'étendent essentiellement dans la direction circonférentielle, les autres flancs de dent (62, 62') s'étendent suivant un premier angle (α₃) par rapport à la direction circonférentielle et les dos de dent (63, 63') s'étendent en direction axiale.

13. Filtre à liquides selon la revendication 12, **caractérisé en ce que** l'angle (α₃) est égal ou supérieur au pas de filetage du couvercle vissé (11).

14. Filtre à liquides selon l'une quelconque des revendications 9 à 13, **caractérisé en ce que** les seconds éléments de couplage (25, 45) sont formés en même temps comme éléments de retenu fonctionnant dans la direction circonférentielle, dont le couple de retenue est inférieur à un couple de freinage du tenon de fermeture (3) se trouvant en position de fermeture.

15. Filtre à liquides selon l'une quelconque des revendications 1 à 5 ou selon l'une quelconque des revendications 11 à 13, **caractérisé en ce que** les dentures des éléments de couplage (24, 34 ; 25, 45) présentent respectivement entre deux et six, de préférence respectivement quatre, dents (5, 5'; 6, 6') distribuées le long de la circonférence.

16. Élément filtrant (2) pour un filtre à liquides (1) selon l'une quelconque des revendications 1 à 15, où l'élément filtrant (2) séparant, à l'état monté, un côté brut et un côté propre du filtre à liquides (1) peut être installé de manière échangeable dans le boîtier de filtre (10) du filtre à liquides (1) comprenant un couvercle vissé (11) amovible et une entrée de liquide brut et une sortie de liquide purifié, et où des premiers éléments de couplage (24) mécaniques sont situés sur l'élément filtrant (2) pour une connexion amovible à des seconds éléments de couplage (34) situés sur un tenon de fermeture (3) fixé, à l'état monté, sur le boîtier de filtre, qui est disposé dans le canal d'évacuation (13) du boîtier de filtre (10) et est muni d'au moins un joint d'étanchéité (33.1, 33.2) assurant une étanchéité radiale dans un siège d'étanchéité dans le canal d'évacuation (13) et peut être déplacé axialement entre une position de fermeture inférieure prise lorsque l'élément filtrant (2) est monté et que le couvercle (11) est fermé, et une position d'ouverture supérieure prise lorsque le couvercle (11) est enlevé et l'élément filtrant (2) est retiré,
**caractérisé en ce**
- **que** les premiers éléments de couplage (24) sur l'élément filtrant (2) forment une première denture, qui peut coopérer avec une seconde denture formée par les seconds éléments de couplage (34) sur le tenon de fermeture (3),
- lorsque les dents (5) des premiers éléments de couplage (24) sont orientées, dans la direction circonférentielle, dans une direction opposée à celle des dents (5') des seconds éléments de couplage (34) et
- lorsque la longueur de dent (l₁) des dents (5) des premiers éléments de couplage (24), vue dans la direction circonférentielle, est inférieure à l'espacement de dent (a₁) des dents (5') des seconds éléments de couplage (34),
- où les éléments de couplage (24) de l'élément filtrant (2) peuvent être mis en prise transmettant un couple et une force de poussée avec les éléments de couplage (34) du tenon de fermeture (3) par la rotation du couvercle vissé (11) et/ou de l'élément filtrant (2) dans le sens de vissage du couvercle vissé (11),
- où les éléments de couplage (24) peuvent être mis en prise transmettant un couple et une force de traction avec les éléments de couplage (34) du tenon de fermeture (3) par la rotation du couvercle vissé (11) et/ou de l'élément filtrant (2) dans le sens de dévissage du couvercle vissé (11), tant que le joint d'étanchéité (33.1, 33.2) se trouve dans le siège d'étanchéité, exerçant un couple de freinage sur le tenon de fermeture (3), et
- où les éléments de couplage (24) de l'élément filtrant (2) peuvent être sortis automatiquement de prise avec les éléments de couplage (34) du tenon de fermeture (3) lorsque le joint d'étanchéité (33.1, 33.2) sort du siège d'étanchéité, ce qui permet au tenon de fermeture (3) de tourner librement autour de son axe longitudinal.

17. Élément filtrant selon la revendication 16, **caractérisé en ce que** les dents (5), vues dans la direction radiale, ont toujours des flancs de dent asymétriques, où respectivement un des flancs de dent (51) s'étend suivant un premier angle (α₁) obliquement par rapport à la direction circonférentielle, l'autre flanc de dents (52) s'étend suivant un second angle (α₂) plus petit par rapport à la direction circonférentielle, et le dos de dent (53) s'étend en direction axiale.

18. Élément filtrant selon la revendication 17, **caractérisé en ce que** le premier angle (α₁) est compris entre 30° et 60°.

19. Élément filtrant selon l'une quelconque des revendications 16 à 18, **caractérisé en ce que** les dents (5) du côté de l'élément de filtre de la denture font saillie axialement vers le bas ou radialement vers l'extérieur ou radialement vers l'intérieur de l'élément filtrant (2).

20. Élément filtrant selon l'une quelconque des revendications 16 à 19, **caractérisé en ce qu'**il comprend un support central (23) et que les éléments de couplage (24) du côté de l'élément filtrant sont disposés à l'extrémité inférieure du support (23).

21. Élément filtrant selon l'une quelconque des revendications 16 à 18, **caractérisé en ce que** des seconds éléments de couplage (25) mécaniques libérables sont situés en haut sur l'élément filtrant (2), en particulier sur un support (23) qui y est disposé, pour un couplage avec des seconds éléments de couplage (45) sur un clapet de dérivation de filtre (4) solidaire du couvercle disposé sur le couvercle vissé (11).

22. Élément filtrant selon la revendication 21, **caractérisé en ce que** les seconds éléments de couplage (25) peuvent être mis en prise transmettant un couple et une force de poussée avec les seconds éléments de couplage (45) du clapet de dérivation de filtre (4) par la rotation du couvercle vissé (11) dans son sens de vissage et être mis en prise transmettant un couple et une force de traction avec les seconds éléments de couplage (45) du clapet de dérivation de filtre (4) par la rotation du couvercle vissé (11) dans son sens de dévissage.

23. Élément filtrant selon la revendication 22, **caractérisé en ce que** les seconds éléments de couplage (25) de l'élément filtrant (2) forment une denture avec des dents (6') orientées dans la direction circonférentielle, où leur espacement de dents (a₂) est respectivement plus large que leur longueur de dent (I₂).

24. Élément filtrant selon la revendication 23, **caractérisé en ce que** les dents (6) des seconds éléments de couplage (25), vues dans la direction radiale, ont toujours des flancs de dent asymétriques, où respectivement un des flancs de dent (61) s'étend essentiellement dans la direction circonférentielle, l'autre flanc de dent (62) s'étend suivant un angle (α₃) par rapport à la direction circonférentielle et le dos de dent (63) s'étend en direction axiale.

25. Élément filtrant selon l'une quelconque des revendications 16 à 19 ou selon l'une quelconque des revendications 23 et 24, **caractérisé en ce que** les dentures des éléments de couplage (24, 25) présentent respectivement entre deux et six, de préférence respectivement quatre, dents (5, 6) distribuées le long de la circonférence.

26. Élément filtrant selon l'une quelconque des revendications 23 à 25, **caractérisé en ce que** les seconds éléments de couplage (25) sont formés en même temps comme éléments de retenu fonctionnant dans la direction circonférentielle, dont le couple de retenue en coopération avec les seconds éléments de couplage (45) du clapet de dérivation de filtre (4) est inférieur à un couple de freinage du tenon de fermeture (3) se trouvant en position de fermeture.
